# EUROPÄISCHE PATENTSCHRIFT

(11) **EP 0 655 166 B1**
(45) Veröffentlichungstag und Bekanntmachung des Hinweises auf die Patenterteilung: **24.04.1996**
(21) Anmeldenummer: 93917536.0
(22) Anmeldetag: 09.08.1993
(51) Int. Cl.: H01H 61/02, H02H 7/085

(54) **SCHUTZEINRICHTUNG FÜR EINEN ELEKTRISCHEN VERBRAUCHER**
PROTECTIVE DEVICE FOR AN ELECTRICAL CONSUMER
DISPOSITIF PROTECTEUR POUR UN CONSOMMATEUR ELECTRIQUE

(30) Priorität: 11.08.1992 DE 9210707 U; 11.11.1992 DE 9215345 U; 25.01.1993 DE 4301958
(43) Veröffentlichungstag der Anmeldung: 31.05.1995
(73) Patentinhaber: WILO GmbH, D-44263 Dortmund (DE); Ellenberger & Poensgen GmbH, D-90518 Altdorf (DE)
(72) Erfinder: SCHMIDT, Wolfgang, D-92348 Berg (DE); REICHERT, Ulrich, D-90518 Altdorf (DE); KRASSER, Fritz, D-90518 Altdorf (DE); TOLKSDORF, Frank, D-58135 Hagen (DE); GREITZKE, Stephan, D-44287 Dortmund (DE); KECH, Hansjürgen, D-58313 Herdecke (DE)
(74) Vertreter: Tergau, Enno, Dipl.-Ing.
(86) Internationale Anmeldenummer: DE9300712
(87) Internationale Veröffentlichungsnummer: WO9405030

(56) Entgegenhaltungen:
- EP-A- 0 004 842
- DE-A- 3 337 738
- DE-A- 3 442 472
- DE-C- 533 139
- DE-U- 9 107 139
- US-A- 3 019 319
- US-A- 3 636 426
- US-A- 3 893 054
- US-A- 4 281 358
- SIEMENS ENERGY & AUTOMATION Bd. IX, Nr. 1 , 1. April 1989 , BERLIN DE Seiten 18 - 22 XP81493 OTMAR FLEIG 'Proper Protection for LV Motors'

## Beschreibung

Die Erfindung betrifft eine Schutzeinrichtung mit den Merkmalen des Oberbegriffs des Anspruches 1.

Derartige Schutzeinrichtungen in vielfach voneinander abgewandelten Ausführungsformen sind aus der Praxis bekannt. Das technische Prinzip kann wie folgt beschrieben werden: Der Schalter wirkt als Schnittstelle zwischen einem Verbraucherstromkreis und einem Steuerstromkreis. Eine Steuereinrichtung mit einem Sensor gibt in Abhängigkeit einer gemessenen physikalischen Größe ein elektrisches Meßsignal an den Steuerstromkreis aus. Der Steuerstromkreis wiederum ist von einem in Abhängigkeit des Meßsignals veränderbaren Steuerstrom durchflossen.

Dabei kann die physikalische Größe - z.B. Strom, Wasserstand, Temperatur, Druck, Beschleunigung u.ä. - an dem in den Verbraucherstromkreis geschalteten elektrischen Verbraucher gemessen werden. Es kann sich aber auch um eine externe physikalische Größe handeln, z.B. der Strom eines anderen Stromkreises oder die Umgebungstemperatur.

Bei Überschreiten eines Grenzwertes für das elektrische Meßsignal unterbricht der Schalter unter Ausnutzung der Auslenkkraft des Bimetalls die Stromleitungen des elektrischen Verbrauchers. Auf diese Weise soll der Verbraucher vor Beschädigungen aufgrund der Einwirkung bestimmter physikalischer Größen geschützt werden.

Schutzeinrichtungen der vorbeschriebenen Art dienen beispielsweise zur Überwachung von elektrischen Kreiselpumpen, die in einer Heizungs-, Frischwasser- oder Brauchwasseranlage eingesetzt werden. Dabei werden in der Regel die für den jeweiligen Betriebszustand der Pumpe wesentlichen Betriebszustände der elektrischen Verbraucher kontrolliert. Maßgeblichen Einfluß auf die Lebensdauer eines Motors hat beispielsweise die Wicklungstemperatur. Hohe Wicklungstemperaturen führen zur vorzeitigen Zerstörung des Motors. Daher schalten die bekannten Schutzvorrichtungen die Motoren bei gegenüber einem vorgegebenen Grenzwert für die Temperatur überhöhten gemessenen Temperaturen ab.

Aus **DE 91 07 139 U1** ist eine derartige Schutzeinrichtung zur Überwachung der Wicklungstemperatur von Elektromotoren bekannt. Die Schutzeinrichtung weist einen Schutzschalter mit stationären und beweglichen Kontakten zur Schaltung der Versorgungsanschlüsse des elektrischen Verbrauchers auf. Die Schaltvorgänge des Schutzschalters werden durch eine Steuereinrichtung gesteuert. Die Steuereinrichtung enthält im wesentlichen einen Steuerstromkreis. Ein die Wicklungstemperatur des Elektromotors überwachender Temperaturfühler ist mit dem Steuerstromkreis elektrisch verbunden. Weiterhin enthält der Steuerstromkreis einen Kaltleiter zur Erwärmung einer im Schutzschalter angeordneten Bimetallscheibe.

Der Temperaturfühler ist als Sensor wirksam und gibt ein elektrisches Meßsignal an den Steuerstromkreis aus. Bei Überschreiten eines Temperaturgrenzwertes ist das elektrische Meßsignal ausreichend groß, um einen Halbleiterschalter durchzuschalten und dadurch einen Steuerstrom durch den obengenannten Kaltleiter zu dessen Erwärmung fließen zu lassen. Der Kaltleiter ist innerhalb des Schutzschalters ortsfest fixiert. Seine abgegebene Wärmeenergie führt nach einer bestimmten Zeit zu einer Erwärmung der mit Abstand und parallel zum Kaltleiter einliegenden Bimetallscheibe, so daß letztere durch ihre Auslenkkraft die Kontakte der Stromleitungen des elektrischen Verbrauchers öffnet.

Ein derartiger Steuerstromkreis mit einem ein elektrisches Meßsignal ausgebenden Sensor wandelt auf einfache Weise eine physikalische Größe - in diesem Fall die Wicklungstemperatur - in eine Schaltbewegung des Bimetalls. Diese Wandlung erfolgt ausschließlich durch elektronische Bauelemente. Da die Bauelemente als Massenartikel angeboten werden, ist eine derartige Steuereinrichtung kostengünstig herstellbar. Auf Grund der verwendeten Elektronik sind derartige Steuereinrichtungen auch mit wenig Raumbedarf in der Schutzeinrichtung integrierbar.

Die Bimetallscheibe bei der bekannten Schutzeinrichtung dient jedoch lediglich als mechanisches Bauteil. Ihre Auslenkung ist deshalb nur aufgrund der indirekten Erwärmung durch den Kaltleiter möglich. Wegen der physikalischen Eigenschaften des Bimetalls führt eine derartige Erwärmung jedoch zu unbefriedigenden, sehr großen Ansprechzeiten der Schutzeinrichtung. Da der Kaltleiter ortsfest fixiert ist, muß die Bimetallscheibe zur Sicherung ihrer Bewegungsfreiheit während der Schaltvorgänge des Schutzschalters in einem Mindestabstand zu dem Kaltleiter angeordnet sein. Dies erhöht jedoch den konstruktiven Aufwand des Schutzschalters sowie die Anzahl der zu verwendenden Bauteile. Weiterhin verursacht der Abstand zwischen Kaltleiter und Bimetallscheibe, daß ein beträchtlicher Teil der vom Kaltleiter erzeugten Wärmeenergie an den Innenraum des Schutzschalters abgegeben wird. Dadurch wird eine ausreichende Erwärmung der Bimetallscheibe zusätzlich verzögert, so daß die Ansprechzeit der Schutzeinrichtung weiter ansteigt. Eine ausreichende und zuverlässige Schutzwirkung der bekannten Schutzeinrichtung ist deshalb nicht möglich. Um bei einer derart konstruktiv ausgelegten Schutzeinrichtung eine verbesserte Ansprechzeit zu erzielen, müßten dementsprechend hochwertigere und somit teurere Bauteile verwendet werden.

Ausgehend von den geschilderten Nachteilen liegt der Erfindung die Aufgabe zugrunde, eine Schutzeinrichtung in kompakter Bauweise mit geringen Abmessungen auszugestalten und mit einfachen Mitteln kostengünstig herzustellen. Zudem soll die Schutzeinrichtung eine erhöhte Sicherheit gegen eine Überbelastung des elektrischen Verbrauchers bieten.

Diese Aufgabe ist durch die Merkmalskombination des Anspruches 1 gelöst.

Der in Auslenkrichtung des Bimetalls wirksame Federdruck unterstützt die Auslenkbewegung des Bimetalls. Dadurch wird die Aktivierungsstellung des Bimetalls zur Auslösung des Schutzschalters in verkürzter Zeit erreicht.
Durch die besondere Anordnung von Bimetall und temperaturabhängigen Widerstand wird der Steuerstrom in zweifacher Weise ausgenutzt. Einerseits durchfließt der Steuerstrom den temperaturabhängigen Widerstand und führt dadurch zu einer indirekten Erwärmung des Bimetalls. Andererseits fließt der Steuerstrom jedoch auch durch das Bimetall selbst und führt dadurch zu einer Eigenerwärmung des Bimetalls. Dies führt insgesamt zu einer schnelleren Erwärmung des Bimetalls und dadurch zu einer weiter verkürzten Ansprechzeit des Schutzschalters.

Da der Kontakt zwischen dem Widerstand und zwischen dem Bimetall sowohl mechanischer als auch elektrischer Art ist, entfällt jeglicher Verdrahtungsaufwand zwischen den Bauteilen innerhalb des Schaltergehäuses. Dadurch werden Arbeitszeit sowie Kosten bei der Herstellung des Schutzschalters eingespart. Da keine separaten elektrischen Verbindungsdrähte oder Litzen vorgesehen sind, entfallen auch jegliche Schutzmaßnahmen innerhalb des Gehäuses zum Schutz der elektrischen Verbindungen vor mechanischen Beschädigungen. Auch die Kurzschlußgefahr oder ungewollte Unterbrechung des Steuerstromkreises durch versehentlich von den Lötstellen abgerissenen Verbindungsdrähten sind ausgeschlossen. Dies erhöht die Sicherheit und die zuverlässige Arbeitsweise des Schutzschalters. Wegen der gewünschten mechanischen und elektrischen Kontaktierung zwischen den Bauteilen müssen auch keine besonderen Schutzmaßnahmen zu deren gegenseitiger Abschirmung getroffen werden. Dies vereinfacht zusätzlich den Aufbau des Schutzschalters.

Nach Anspruch 2 ist es möglich, die erforderliche Versorgungsspannung für das Netzteil der Schutzeinrichtung direkt den Anschlußklemmen des Motors zu entnehmen. Durch den Einsatz eines Kaltleiters ist die erfindungsgemäße Schutzeinrichtung in einem weiten Betriebsspannungsbereich einsetzbar. Dies führt zu einer vielseitigen Einsetzbarkeit der erfindungsgemäßen Schutzeinrichtung. So kann die gleiche Schutzeinrichtung nicht nur für zwischen 100 Volt und 400 Volt liegenden Versorgungsspannungen betrieben werden, sondern sie kann auch bei fehlender oder unsymmetrischer Phasenspannung sowie bei unterschiedlichen Spannungsformen, wie sie z.B. bei durch phasenanschnitt- oder frequenzumrichtergespeisten Motoren vorliegen, betrieben werden.

Aufgrund der Unabhängigkeit der Versorgungs- bzw. Klemmenspannung kann die Schutzeinrichtung gemäß Anspruch 3 räumlich dem Motor zugeordnet werden und damit im Motorklemmenkasten selbst integriert sein. Dadurch verringert sich der Montage- und Verdrahtungsaufwand bei der Herstellung der erfindungsgemäßen Schutzeinrichtung erheblich.

Wird die erfindungsgemäße Schutzeinrichtung an einem elektrischen Motor eingesetzt, so sollte aus den obengenannten Gründen der Sensor die Temperatur des elektrischen Verbrauchers, insbesondere die Wicklungstemperatur eines Motors erfassen.

Ein weiteres Maß für den Betriebszustand eines elektrischen Verbrauchers ist seine Stromaufnahme. Es kann daher auch ein Sensor zur Überwachung eines elektrischen Verbrauchers eingesetzt werden, der gemäß Anspruch 5 als Shunt, Hallelement oder Stromtrafo zur Erfassung des von dem elektrischen Verbraucher aufgenommenen Stromes ausgebildet ist.

Nach Anspruch 6 ist eine einfach zu montierende Schutzeinrichtung dadurch geschaffen, daß der Sensor mit einem Mikroprozessor oder ASIC verbunden ist, der das Signal zum Abschalten des elektrischen Verbrauchers abgibt.

Gemäß Anspruch 7 sollte der Schutzschalter einen zusätzlichen Kontakt aufweisen, über den bei ausgelösten Schutzschalter ein Meldesignal auslösbar ist. In diesem Fall ist es auf unkomplizierte Weise möglich, gleichzeitig mit dem Ein- oder Ausschalten des elektrischen Verbrauchers ein akustisches oder optisches Signal auszulösen.

Eine Anordnung von Widerstand und Bimetall nach Anspruch 8 ist für einen guten elektrischen Kontaktdruck geeignet.
Außerdem ist hierdurch die direkte Abgabe von Wärmeenergie ohne Zwischenmedium an das Bimetall möglich, so daß die Ansprechzeit des Bimetalls weiter verkürzt wird.

Anspruch 9 betrifft eine bevorzugte Ausführungsform des in den Schutzschalter eingesetzten temperaturabhängigen Widerstands. PTC-Widerstände werden meist in Scheibenform hergestellt und sind deshalb in wirksamer Weise für eine mechanische sowie elektrische Kontaktierung mit dem Bimetall geeignet. Wegen seiner strombegrenzenden Wirkung schützt der PTC-Widerstand den Steuerstromkreis vor zu hohen Steuerströmen. Sämtliche Bauteile des Steuerstromkreises werden dadurch vor Beschädigungen infolge übergroßer Erhitzung durch den Steuerstrom geschützt. Dies fördert die zuverlässige Arbeitsweise des Schutzschalters.

Die besondere mechanische Anordnung von Widerstand und Bimetall nach Anspruch 10 vergrößert die beiderseitige elektrische Kontaktfläche und gewährleistet somit ohne zusätzliche elektrische Kontaktierungsmittel einen zuverlässigen elektrischen Kontakt zwischen beiden Bauteilen. Diese Anordnung fördert außerdem die kompakte und raumsparende Ausgestaltung des Schaltergehäuses.

Gemäß Anspruch 11 ist auch die die Auslenkbewegung des Bimetalls unterstützende Druckfeder als elektrisches Bauteil des Steuerstromkreises wirksam. Somit hat die Druckfeder eine mechanische und eine elektrische Funktion. Dadurch werden Bauteile innerhalb des Schutzschalters eingespart. Dies wiederum senkt die Kosten des Schutzschalters und unterstützt den platzsparenden Aufbau des Schaltergehäuses.

Gemäß Anspruch 12 wird die Druckfeder weiterhin als direkte elektrische Verbindung zwischen einem Anschlußkontakt des Steuerstromkreises und dem Bimetall verwendet. Dadurch ist der Steuerstromkreis innerhalb des Schutzschalters mit einem Minimum an Bauteilen geschlossen. Dies wirkt sich günstig auf den gewünschten platz- sowie kostensparenden Aufbau des Schutzschalters aus.

Die besondere Ausgestaltung der Druckfeder gewährleistet außerdem einen permanent wirksamen Anpreßdruck zwischen Druckfeder, Widerstand und Bimetall, so daß den Steuerstrom negativ beeinflußende Übergangswiderstände zwischen diesen Bauteilen vermieden werden. Somit wird der von der an den Schutzschalter angeschlossenen Steuereinrichtung erzeugte Steuerstrom nicht verfälscht. Auf diese Weise ist eine genaue Arbeitsweise des Schutzschalters gewährleistet. Die gegenseitige Anordnung der drei vorgenannten Bauteile fördert den platzsparenden Aufbau des Schutzschalters zusätzlich.

Nach Anspruch 13 ist das Bimetall mechanisch stabil im Schaltergehäuse gelagert. Die gehäusefeste Lagerung der sich gegenüberliegenden Seiten des Bimetalls bewirkt, daß bei vorhandenem Steuerstrom im wesentlichen nur der zwischen den Seitenenden liegende mittlere Bereich des Bimetalls ausgelenkt wird. Eine nach Anspruch 12 am Widerstand anliegende Druckfeder unterstützt deshalb aufgrund der Anordnung des Widerstandes nach Anspruch 13 in wirksamer Weise die Auslenkbewegung des Bimetalls zusätzlich, wodurch die Ansprechzeit des Schutzschalters weiterhin verkürzt wird.

Wegen der zentralen Anordnung des Widerstandes am mittleren Bereich des Bimetalls werden mechanisch stabile Auslenk- bzw. Verschiebebewegungen der Bauteile erzielt. Die Anforderungen an ein besonders ausgestaltetes Gehäuseinneres für die Bewegungsführung von Bimetall, Widerstand und/oder Druckfeder sind deshalb reduziert. Dies wirkt kostensparend bei der Herstellung des gesamten Schutzschalters.

Aufgrund der besonderen Lagerung gemäß Anspruch 14 ist das Bimetall als Schnappscheibe wirksam. Dadurch werden zwei definierte Stellungen des Bimetalls, nämlich die Aktivierungsstellung und die Ruhestellung, erzielt. Dies unterstützt die zuverlässige Arbeitsweise des Schutzschalters.

Federzungen nach Anspruch 15 erfüllen eine Doppelfunktion als mechanisches und elektrisches Bauteil, wodurch weiterhin Bauteile eingespart werden. Da das Bimetall nach Anspruch 14 an den Federzungen gehalten ist, ergibt sich eine direkte elektrische Kontaktierung zwischen Bimetall und Kontaktbügel. Die durch die mechanische Lagerung bedingte elektrische Kontaktierung bewirkt außerdem einen reduzierten Montageaufwand der Bauteile innerhalb des Schutzschalters.

Gemäß Anspruch 16 wird für die Lagerung des Bimetalls die aus **RICHTER, v.VOSS, KOZER, Bauelemente der Feinmechanik, VEB Verlag Technik Berlin, 1964, 9. Auflage, S. 229 ff.** bekannte Schneidenlagerung mit all ihren Vorteilen verwendet. Dadurch entsteht eine wirksame Fixierung der einander diametral gegenüberliegenden Endbereiche des Bimetalls.

Anspruch 17 betrifft eine bevorzugte Ausführungsform des Schutzschalters, um den Verbraucherstromkreis mit Hilfe des Bimetalls unterbrechen zu können.

Da die Kontaktbrücke in Kontaktschließrichtung unter Federdruck steht, ist der Verbraucherstromkreis bei nicht ausgelenktem Bimetall in sicherer Weise geschlossen.

Die mechanische Verbindung von Bimetall und Kontaktbrücke gemäß Anspruch 18 ermöglicht eine wirksame Kraftübertragung der Auslenkbewegung des Bimetalls zur Unterbrechung des Verbraucherstromkreises.

Der gemäß Anspruch 19 gelagerte Schieber vollführt definierte Schubbewegungen innerhalb des Schaltergehäuses. Versehentliche Fehlbewegungen und daraus resultierende mögliche Beschädigungen anderer Bauteile sind deshalb ausgeschlossen. Die verschiebbare Lagerung des Schiebers unterstützt auch die wirksame Kraftübertragung der Auslenkbewegung des Bimetalls.

Die übereinstimmenden Bewegungsrichtungen vieler Bauteile während ihrer Auslenkung gemäß Anspruch 20 bewirken, daß der Auslösemechanismus des Schutzschalters mit sehr geringem Bauteileaufwand realisiert werden kann. Wegen der geringen Anzahl der Bauteile ist die Auslösemechanik auch technisch unkompliziert. Dies wiederum verringert die Störanfälligkeit des Schutzschalters.

Die übereinstimmenden Bewegungsrichtungen sind eine Voraussetzung für die schmale Bauweise des Schutzschalters.

Anspruch 21 betrifft eine bevorzugte Ausführungsform der Kontaktbrücke, damit bei nicht ausgelenktem Bimetall der Verbraucherstromkreis innerhalb des Schutzschalters zuverlässig geschlossen bleibt.

Gemäß Anspruch 22 ist die Kontaktfeder in sicherer Weise innerhalb des Schaltergehäuses fixiert. Sie kann deshalb nur die gewünschten Verschiebebewegungen in Kontaktschließ- und Kontaktöffnungsrichtung vollführen. Dadurch sind unerwünschte Beeinflussungen anderer Bauteile vermieden.

Ein nach Anspruch 23 ausgestalteter Schutzschalter ist nicht nur für einphasige, sondern auch für mehrphasige Stromarten geeignet. Es ist auch denkbar, daß mehrere unabhängig voneinander arbeitende einphasige Verbraucherstromkreise gemeinsam unterbrochen werden sollen. Hierfür ist der mehrpolige Schutzschalter ebenfalls geeignet.

Die geometrische Anordnung der innerhalb des Schutzschalters nach Anspruch 24 vorhandenen Kontaktbrücken unterstützt wiederum die schmale Bauweise des Schutzschalters. Außerdem ist dadurch der Einsatz eines einzigen, konstruktiv einfach ausgestalteten Schiebers zur Übertragung seiner Schubbewegungen auf sämtliche Kontaktbrücken des Schutzschalters vereinfacht. Dies wirkt sich wiederum kosten- und raumsparend auf die konstruktive Ausgestaltung des gesamten Schutzschalters aus.

Die Ansprüche 25 und 26 betreffen bevorzugte Ausführungsformen einer Verriegelungseinrichtung für den Schutzschalter. Die Verriegelungseinrichtung bewirkt, daß der Schieber bei ausgelösten Schutzschalter die Kontaktbrücke zuverlässig in dessen Kontaktöffnungsstellung hält. Ohne weitere Entriegelungsmaßnahmen wird auf diese Weise vermieden, daß der Verbraucherstromkreis versehentlich geschlossen und der elektrische Verbraucher dadurch möglicherweise beschädigt oder zerstört wird.

Die Ansprüche 27 und 28 betreffen bevorzugte Ausführungsformen der Riegelfeder. Eine derartige Riegelfeder liegt platzsparend innerhalb des Schaltergehäuses ein. Sie unterstützt deshalb den schmalen Aufbau des Schutzschalters. Wegen ihrer konstruktiv einfachen Ausgestaltung trägt die Riegelfeder auch dazu bei, den technischen Aufwand für die Verriegelungseinrichtung gering zu halten.

Anspruch 29 betrifft eine bevorzugte Ausführungsform der Verriegelungseinrichtung, um den Verbraucherstromkreis nach ausgelösten Schutzschalter manuell wieder schließen zu können.

Der Erfindungsgegenstand wird anhand der in den Zeichnungen dargestellten Ausführungsbeispiele näher erläutert. Es zeigen:
- Fig. 1: eine schematische Darstellung einer Schutzeinrichtung für einen Pumpenmotor,
- Fig. 2: einen Schaltplan der Schutzeinrichtung nach Fig. 1,
- Fig. 3: eine perspektivische Darstellung des Schutzschalters in seinem Montageendzustand,
- Fig. 4: eine Explosionsdarstellung des Schutzschalters nach Fig. 3,
- Fig. 5: eine Draufsicht des geöffneten Schutzschalters,
- Fig. 6: eine geschnittene Seitenansicht des Schutzschalters entsprechend der Schnittlinie Vl-VI in Fig. 5 mit in seiner Ruhestellung befindlichem Bimetall,
- Fig. 7: die Seitenansicht des Schutzschalters gemäß Fig. 6 mit in seiner Aktivierungsstellung befindlichem Bimetall,
- Fig. 8: eine geschnittene Seitenansicht des Schutzschalters entsprechend der Schnittlinie VIII-VIII in Fig. 5 mit in seiner Ruhestellung befindlichem Bimetall und geschlossenen Kontaktbrücken,
- Fig. 9: die Seitenansicht des Schutzschalters gemäß Fig. 8 mit in seiner Aktivierungsstellung befindlichem Bimetall und geöffneten Kontaktbrücken.

Die erfindungsgemäße Schutzeinrichtung ist in einem Klemmenkasten K für einen Pumpenmotor M integriert. Der Klemmenkasten K ist mit Anschlußklemmen L1 - L3 und Störmeldekontakten a,b ausgestattet. Die Schutzeinrichtung weist ein an die Anschlußklemmen L1, L2 des Klemmenkastens angeschlossenes Netzteil N, eine Steuer- und Auswerteelektronik A, einen Auslösethyristor T und einen bimetallgesteuerten Schutzschalter 1 auf.

Die Steuer- und Auswerteelektronik A ist mit in die Wicklungen des Motors M eingefügten Temperatursensoren R1 verbunden. Darüber hinaus ist die Steuer- und Auswerteelektronik A mit Sensoren H zum Erfassen der Stromaufnahme des Motors M verbunden. Der Schutzschalter 1 weist vier Kontaktbrücken 35 auf. Bei geschlossenen Kontaktbrücken 35 ist der Motor M mit den Anschlußklemmen L1 - L3 des Klemmenkastens K verbunden. Gleichzeitig sind auch die Störmeldekontakte a,b miteinander verschaltet. Darüber hinaus leuchtet bei geschlossenem Schutzschalter 1 eine Kontrolleuchte LE, die den ordnungsgemäßen Betrieb des Motors M anzeigt.

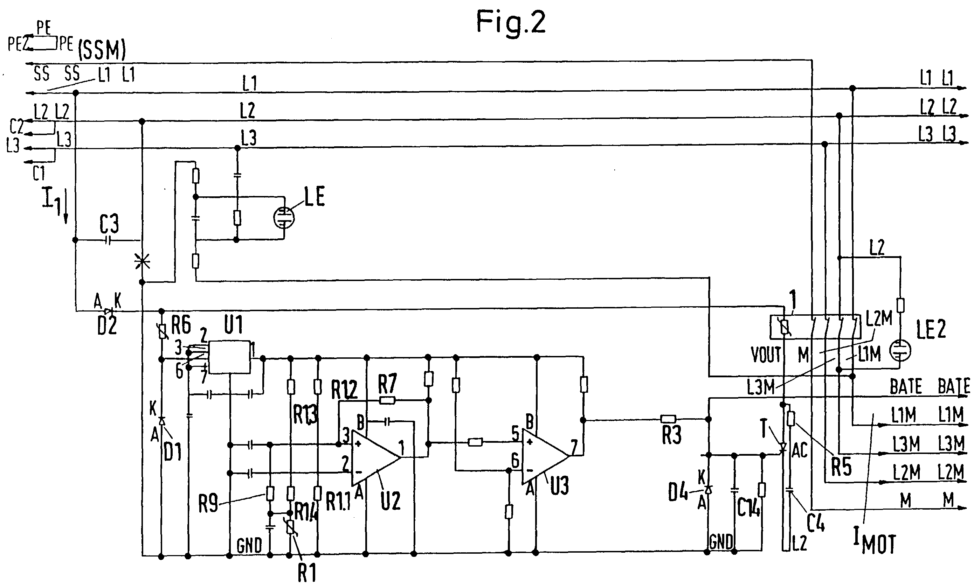

Das Netzteil N der Schutzeinrichtung ist im wesentlichen aus den in Fig. 2 gezeigten Bauteilen C3, D2, R6, D1 und U1 gebildet. Die Spannungsversorgung erfolgt aus der an den Anschlußklemmen L1,L2 anliegenden Klemmenspannung über die Bauteile D2, R6 und D1. Die Diode D2 dient zur einphasigen Gleichrichtung der Wechselspannung. Durch den temperaturabhängigen Widerstand R6 (PTC) wird eine Begrenzung des Eingangsstromes I1 über einen breiten Eingangsspannungsbereich erzielt, welcher beispielsweise 230 400 Volt betragen kann. Die Zenerdiode D1 dient zur Vorstabilisierung des Spannungsreglers U1. Der Spannungsregler U1 stabilisiert die Versorgungsspannung für die nachfolgende Steuer- und Auswerteelektronik A. Dabei dient der Kondensator C3 als Schutzbeschaltung gegen Spannungsspitzen aus dem allgemeinen Stromversorgungsnetz.

Die in der Motorwicklung eingebrachten Temperatursensoren R1 sind im vorliegenden Fall als Kaltleiter ausgebildet. Diese Kaltleiter R1 sind im Zweig einer aus den Widerständen R1.1 bis R1.4 gebildeten ohmschen Brücke angeordnet. Ein zu der ohmschen Brücke parallel geschalteter Parallelwiderstand R9 ist so dimensioniert, daß sich die ohmsche Brücke bei einer Wicklungstemperatur, die dem Normalbetriebszustand des Motors M entspricht, d.h. unterhalb einer Ansprechtemperatur liegt, sich im abgeglichenen Zustand befindet. Die Brückenspannung der ohmschen Brücke ist auf die Differenzeingänge eines Operationsverstärkers U2 geschaltet.

Im Normalzustand der Kaltleiter R1 ist das Ausgangspotential des Operationsverstärkers U2 demnach gleich Null. Beim Überschreiten der zulässigen Wicklungstemperatur werden die Kaltleiter hochohmig, so daß die an den Eingängen des Operationsverstärkers U2 anliegende Differenzspannung positiv und damit der Ausgang des Operationsverstärkers U2 auf einen Pegel von ca. 5 Volt ansteigt. Dabei wird durch einen Widerstand R7 eine Rückkopplung hergestellt, die zu einer Schaltungshysterese führt und damit ein zuverlässiges Umschalten des Operationsverstärkers U2 bewirkt.

Ein zweiter Operationsverstärker U3 wird von dem ersten Operationsverstärker U2 angesteuert und zündet mit seiner Ausgangsspannung den nachgeschalteten Thyristor T. Bei gezündeten Thyristor T wird ein im Schutzschalter 1 integrierter temperaturabhängiger Widerstand 19, dessen Funktion nachfolgend noch erläutert wird, erwärmt. Der Widerstand 19 ist hier ein Kaltleiter. Aufgrund seiner Erwärmung löst der Schutzschalter 1 nach einer vorbestimmten Ansprechdauer aus, so daß die Kontaktbrücken 35 des Schutzschalters 1 geöffnet werden und der Motorstrom unterbrochen wird. Ein Widerstand R3 dient zur Zündstrombegrenzung des Thyristors T. Die Diode D4 und der Kondensator C14 bilden eine Schutzbeschaltung des Thyristor-Gates. Der Kondensator C4 und der Widerstand R5 schützen den Thyristor T gegenüber Spannungen aus dem allgemeinen Stromversorgungsnetz.

Die Erwärmung des in dem Schutzschalter 1 enthaltenen temperaturabhängigen Widerstandes 19 führt dazu, daß sich der Schutzschalter 1 erst dann manuell zurücksetzen läßt, wenn die Temperatur des durch den Widerstand 19 erwärmten Bimetalls 18 abgesunken ist. Dies hat zur Folge, daß der Motor M erst dann wieder eingeschaltet werden kann, wenn die von dem Kaltleiter R1 erfaßte Wicklungstemperatur des Motors M unter die Ansprechtemperatur der Steuer- und Auswerteelektronik A gesunken ist, so daß der Thyristor T ausgeschaltet ist und damit das Bimetall 18 des Schutzschalters 1 nicht mehr beheizt wird. Dies führt dazu, daß zwischen dem Abschalten des Motors M und dem Zurücksetzen des Schutzschalters 1 eine durch die Abkühlgeschwindigkeit des Bimetalls 18 vorgegebene Zeit vergehen muß, in der das Wiedereinschalten des Motors M nicht möglich ist. Durch diese temperatur- und zeitabhängige Wiedereinschaltsperre wird ein zu frühes und ein zu häufiges Einschalten des Motors M und damit eine mögliche Schädigung der Motorwicklungen vermieden.

Der Schutzschalter 1 weist neben seinen drei Kontaktbrücken 35 für das Einschalten des Motors M eine vierte Kontaktbrücke 35 auf, über welche die Störmeldekontakte a,b miteinander zu verschalten sind. Die Kontrolleuchte LE liegt zwischen den Anschlußklemmen L1 und L3 des Klemmenkastens K. Bei geschlossenem Schutzschalter 1 signalisiert die Kontrolleuchte LE den störungsfreien Betrieb des Motors M. Eine zweite Meldeleuchte LE2 liegt über einem zweiten Kontakt des Schutzschalters 1. Bei ausgelösten Schutzschalter 1, d.h. bei einer Störung des Motors M, wenn die Kontaktbrücken 35 geöffnet sind, läßt die über dem Kontakt liegende Spannung die Meldeleuchte LE2 ansprechen, die somit eine Störung des Motors M anzeigt.

Im nachfolgenden wird der Aufbau des Schutzschalters 1 im einzelnen erläutert.

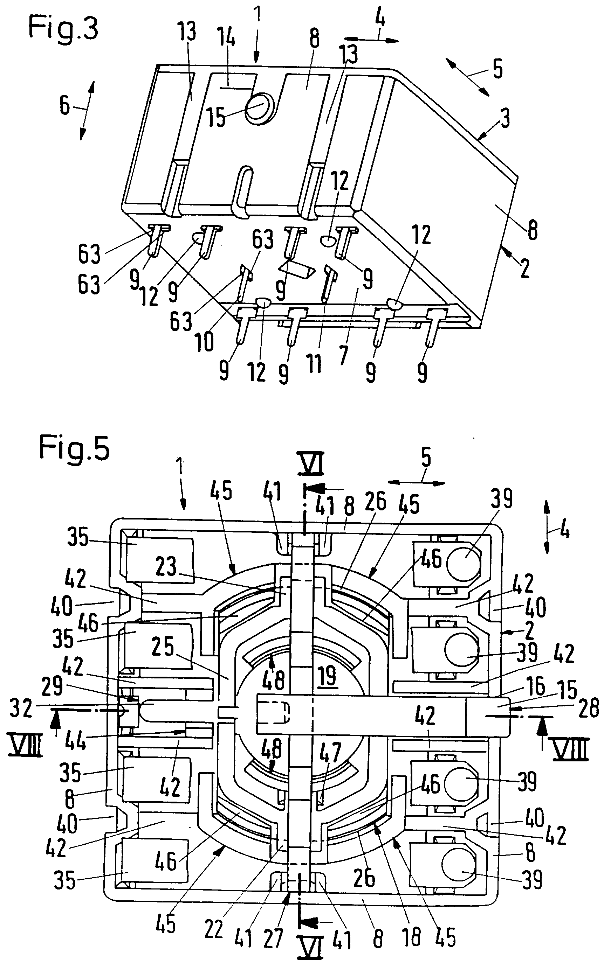

In Fig. 3 ist der Schutzschalter 1 mit im wesentlichen quaderförmigen Außenkonturen erkennbar. Das quaderförmige, aus Kunststoff bestehende Schaltergehäuse setzt sich aus einem topfartigen Gehäuseschacht 2 und einem darauf aufgesetzten Gehäusedeckel 3 zusammen. Die Außenkonturen des Schutzschalters 1 verlaufen entlang der rechtwinklig zueinander angeordneten Längsrichtung 4, Querrichtung 5 und Höhenrichtung 6.

Der Gehäuseschacht 2 setzt sich aus einem Gehäuseboden 7 sowie rechtwinklig und einstückig daran angeformten Seitenwänden 8 zusammen. Der Gehäuseboden 7 weist in Höhenrichtung 6 betrachtet eine rechteckige Außenkontur auf und liegt in der durch die Längsrichtung 4 und die Querrichtung 5 gebildeten Ebene ein. Von den vier Seitenwänden 8 sind in Fig. 3 nur zwei aneinandergrenzende in der durch die Höhenrichtung 6 und Längsrichtung 4 gebildeten bzw. in der durch die Höhenrichtung 6 und Querrichtung 5 gebildeten Ebene einliegenden Seitenwände 8 erkennbar.

Der Gehäuseschacht 2 nimmt topfartig die einem Verbraucherstromkreis und einem Steuerstromkreis zugeordneten Bauteile sowie die Bauteile einer Auslösemechanik auf. Aus dem Gehäuseboden 7 stehen in Höhenrichtung 6 pinartige Verbraucheranschlüsse 9 hinaus. Jeweils zwei in Querrichtung 5 hintereinanderliegende Verbraucheranschlüsse 9 sind einer Phase des Verbraucherstromkreises zugeordnet. Der Verbraucherstromkreis kann einphasig oder mehrphasig sein. In Fig. 3 ist der Schutzschalter 1 als vierpoliger Schalter ausgebildet. Dementsprechend ist der Gehäuseboden 7 von insgesamt acht Verbraucheranschlüssen 9 durchbrochen. Jeweils vier Verbraucheranschlüsse 9 sind in den in Längsrichtung 4 verlaufenden Randbereichen des Gehäusebodens 7 angeordnet.

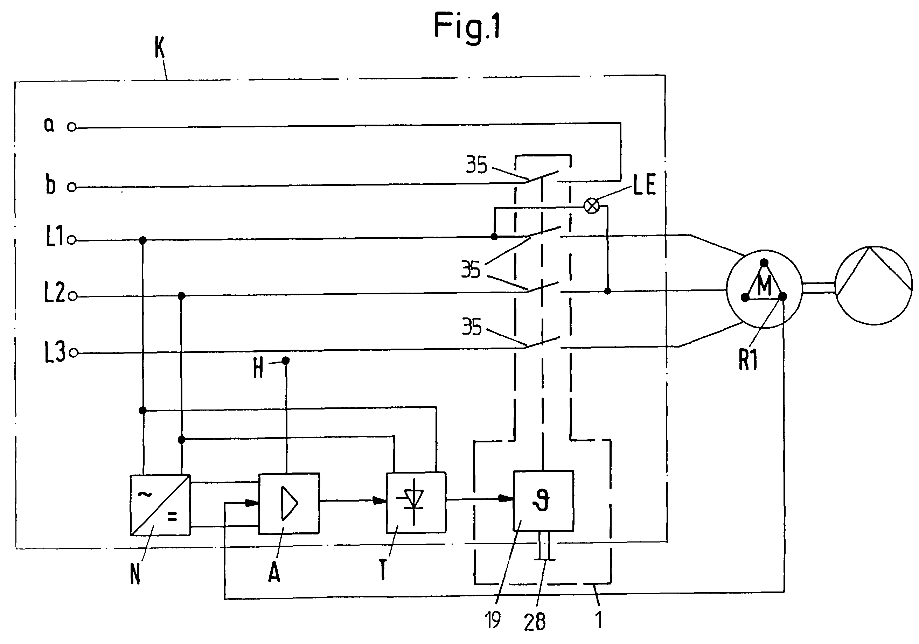

In seinem zentralen Bereich ist der Gehäuseboden 7 entlang der Höhenrichtung 6 von zwei ebenfalls pinartigen Steueranschlüssen 10,11 durchbrochen. Zur sicheren Befestigung sind die Verbraucheranschlüsse 9 und die Steueranschlüsse 10,11 im Bereich des Gehäusebodens 7 durch Anschlußkerben 63 aufgeweitet oder um ihre in Höhenrichtung 6 verlaufende Längsachse gedreht.
An die beiden Steueranschlüsse 10,11 wird eine Steuereinrichtung angeschlossen. Die Steuereinrichtung mißt durch den Temperatursensor R1 bzw. den Sensor H (Fig. 1,Fig. 2) eine physikalische Größe eines elektrischen Verbrauchers, z.B. die Temperatur einer Motorwicklung oder eine externe physikalische Größe. Bei Überschreiten eines Grenzwertes der gemessenen physikalischen Größe wird an die beiden Steueranschlüsse 10,11 eine Steuerspannung angelegt. Durch die noch näher zu beschreibenden Bauteile des Steuerstromkreises fließt in diesem Fall ein Steuerstrom.

Mit Hilfe der Verbraucheranschlüsse 9 und der Steueranschlüsse 10,11 wird der Schutzschalter 1 auf einer Leiterplatte angelötet. Zu diesem Zweck sind vier etwa halbkugelförmige Abstandsnoppen 12 am Gehäuseboden 7 angeformt. Die Abstandsnoppen 12 befinden sich in dem von den Verbraucheranschlüssen 9 eingegrenzten Bereich des Gehäusebodens 7. Sie bewirken beim Aufsetzen des Schutzschalters 1 auf die Leiterplatte einen Abstand zwischen Gehäuseboden 7 und der Leiterplatte.

In Fig. 3 ist der Gehäuseschacht 2 durch den Gehäusedeckel 3 verschlossen. Zu diesem Zweck wird der Gehäusedeckel 3 in Höhenrichtung 6 auf den Gehäuseschacht 2 aufgesetzt. In Höhenrichtung 6 betrachtet entspricht die Außenkontur des Gehäusedeckels 3 derjenigen des Gehäuseschachtes 2. An den Gehäusedeckel 3 sind insgesamt vier in Höhenrichtung 6 verlaufende Federhaken 13, von denen in Fig. 3 nur zwei sichtbar sind, einstückig angeformt. Die Federhaken 13 sind in Querrichtung 5 betrachtet rechteckig ausgestaltet und verlaufen mit ihrer längeren Seite ausgehend von der Gehäusedeckelebene dem Gehäuseboden 7 zugewandt in Höhenrichtung 6. Jeweils zwei Federhaken 13 sind an den beiden in Längsrichtung 4 verlaufenden Seitenkanten des Gehäusedeckels 3 angeformt. Sie rasten in entsprechend ausgestaltete, entlang der Höhenrichtung 6 verlaufende Aussparungen der Seitenwände 8 ein.

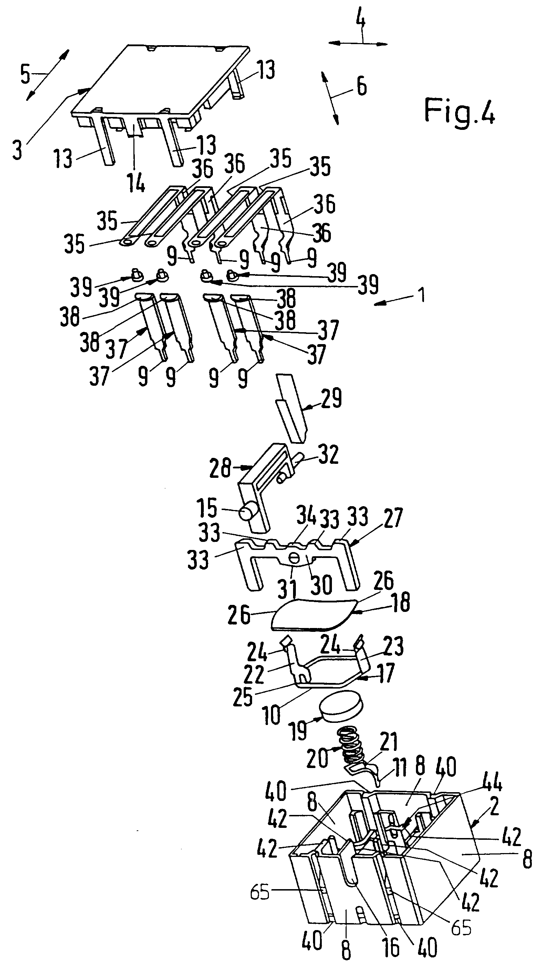

Parallel zu den beiden in Fig. 3 sichtbaren, der Verrastung des Gehäusedeckels 3 mit dem Gehäuseschacht 2 dienenden Federhaken 13 verlaufend ist am Gehäusedeckel 3 ein Knopf-Fixiersteg 14 einstückig angeformt. Der Knopf-Fixiersteg 14 befindet sich in Längsrichtung 4 betrachtet mittig zwischen den beiden Federhaken 13 und ist in dieser Richtung gegenüber den Federhaken 13 verbreitert ausgestaltet. Der Knopf-Fixiersteg 14 erstreckt sich in Höhenrichtung 6 nur etwa halb so weit wie die Federhaken 13. Seine dem Gehäuseboden 7 zugewandte Außenkontur ist kreissegmentartig ausgewölbt. Die Konkavseite dieser Auswölbung umfaßt formschlüssig einen Druckknopf 15. Der Druckknopf 15 weist in Querrichtung 5 betrachtet eine kreisförmige Druckfläche für dessen manuelle Betätigung auf. Er steht als zylinderförmiges Teil aus der in der durch die Höhenrichtung 6 und die Längsrichtung 4 gebildeten Ebene einliegenden Seitenwand 8 hinaus. Damit die Seitenwand 8 den Druckknopf 15 und den Knopf-Fixiersteg 14 formschlüssig aufnehmen kann, ist sie mit einer U-förmigen Druckknopf-Aufnahme 16 versehen (Fig. 4).

In Fig. 4 ist erkennbar, daß in dem Gehäuseschacht 2 und am Gehäusedeckel 3 eine Mehrzahl von Stegen mit unterschiedlichen Außenkonturen angeformt sind. Sie dienen der Bewegungsführung und der Lagerung der im Montageendzustand in den Gehäuseschacht 2 eingesetzten und in Fig. 4 erkennbaren Bauteile. Mit den dort dargestellten Bauteilen werden die Strompfade des Steuerstromkreises und der Verbraucherstromkreise innerhalb des Schutzschalters 1 sowie dessen Auslösemechanik realisiert. Der Strompfad des Steuerstromkreises innerhalb des Schutzschalters 1 wird ausgehend von dem mit einem Kontaktbügel 17 verbundenen Steueranschluß 10, dem Bimetall 18, dem temperaturabhängigen Widerstand 19, einer Druckfeder 20 sowie einem mit dem Steueranschluß 11 einstückig verbundenen Federlager 21 gebildet.

Der Kontaktbügel 17 ist in Querrichtung 5 betrachtet U-förmig. Die U-Schenkel sind durch streifenartige, in Höhenrichtung 6 verlaufende Federzungen 22,23 gebildet. Die beiden Federzungen 22,23 sind identisch ausgestaltet. Im Bereich ihrer Freienden sind die beiden Federzungen 22,23 entlang der Höhenrichtung 6 derart gebogen ausgestaltet, daß sie dort jeweils eine V-förmige Kerbe mit in Längsrichtung 4 einander zugewandten Offnungen bilden. Der U-Grund des Kontaktbügels 17 ist durch einen in Höhenrichtung 6 betrachtet rechteckigen Bügelrahmen 24 gebildet. Er liegt in der durch die Längsrichtung 4 und Querrichtung 5 gebildeten Ebene ein. Er verbindet die beiden Federzungen 22,23 miteinander. Die Verbindungsstelle zwischen Bügelrahmen 25 und den Federzungen 22,23 befindet sich an deren ihrer jeweiligen Kerbe 24 in Höhenrichtung 6 abgewandten Ende. In diesem Bereich ist auch an der Federzunge 22 der Steueranschluß 10 einstückig angeformt.

Die beiden Federzungen 22,23 sind in Längsrichtung 4 einander zugewandt vorgespannt. Das scheibenartige Bimetall 18 kann auf diese Weise zuverlässig in den Kerben 24 gelagert werden. Der von den Federzungen 22,23 in Längsrichtung 4 erzeugte Federdruck bewirkt außerdem die elektrische Kontaktierung zwischen dem Steueranschluß 10 und dem Bimetall 18. Das Bimetall 18 weist in Höhenrichtung 6 betrachtet zwei in Längsrichtung 4 verlaufende Außenkanten und zwei diese entlang der Querrichtung 5 verbindende Seitenkanten 26,26' auf. Die Seitenkanten 26,26' verlaufen in Querrichtung 5 kreissegmentartig gewölbt. Mit ihren Konkavseiten sind sie einander zugewandt. Im Montageendzustand kontaktieren die Seitenkanten 26,26' annähernd punktförmig den V-Grund der ihnen zugeordneten Kerbe 24. Durch diese punktförmige Lagerung werden die Federzungen 22,23 aufgrund der Auslenkbewegungen des Bimetalls 18 in Höhenrichtung 6 praktisch mechanisch nicht beansprucht. Auf diese Weise bleibt auch der Federdruck der Federzungen 22,23 über eine sehr lange Betriebszeit erhalten.

Im Montageendzustand ist das Bimetall 18 mit der kreisförmigen Oberfläche des temperaturabhängigen Widerstands 19 elektrisch kontaktiert. Der Widerstand 19 ist vorzugsweise als PTC-Widerstand ausgebildet. Neben der gewünschten Wärmeabgabe zur Aufheizung des Bimetalls 18 begrenzt der PTC-Widerstand auch den Steuerstrom, so daß er auch eine Schutzfunktion für den Steuerstromkreis übernimmt. Ist diese Schutzfunktion jedoch nicht notwendig, so ist auch denkbar, einen NTC-Widerstand als Widerstand 19 einzusetzen. In Fig. 4 weist der Widerstand 19 eine Scheibenform auf. Mit seiner dem Bimetall 18 abgewandten kreisförmigen Oberfläche kontaktiert der Widerstand 19 im Montageendzustand die als Schraubenfeder ausgestaltete Druckfeder 20. Die Wirkrichtung der Druckkraft der Druckfeder 20 entspricht der Höhenrichtung 6. Weiterhin kontaktiert das dem Widerstand 19 abgewandte Federende der Druckfeder 20 im Montageendzustand das Federlager 21. Das Federlager 21 erstreckt sich in einer durch die Längsrichtung 4 und die Querrichtung 5 gebildeten Ebene. Es ist als etwa quadratische Platte ausgestaltet und gegenüber dem einstückig mit ihm verbundenen Steueranschluß 11 rechtwinklig abgebogen. Der Steueranschluß 11 ist hierbei als Verlängerung einer Eckkante des metallischen Federlagers 21 ausgebildet.

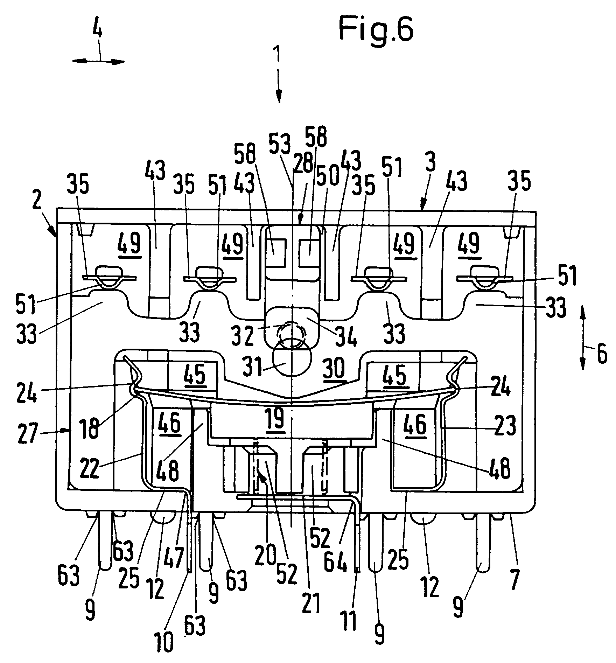

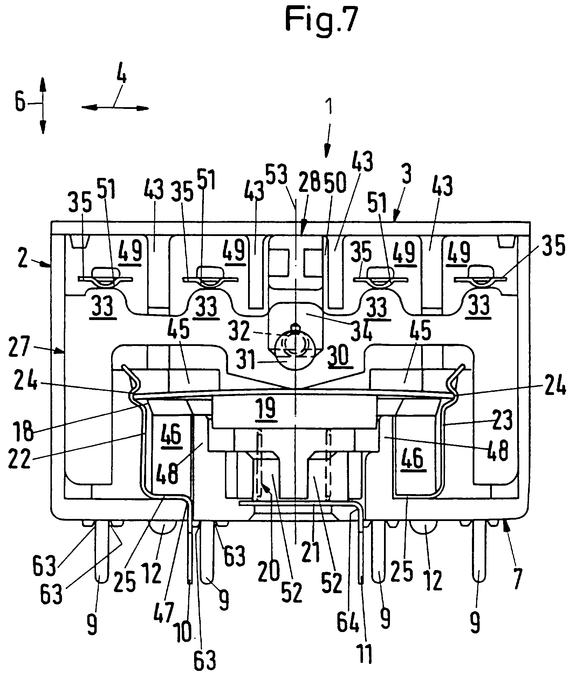

Ein in Querrichtung 5 betrachtet U-förmiger Schieber 27, ein den Druckknopf 15 enthaltender Riegelkörper 28 und eine in Längsrichtung 4 betrachtet U-förmig und als Blattfeder ausgestaltete Riegelfeder 29 bilden die wesentlichen Bauteile zur Unterbrechung des Verbraucherstromkreises. Der U-Grund des Schiebers 27 ist in seinem zentralen Bereich in Richtung auf das Bimetall 18 als Schiebervorsprung 30 erweitert ausgestaltet. In Querrichtung 5 betrachtet verlaufen die Außenkonturen des Schiebervorsprunges 30 in dem sich unmittelbar an den U-Grund anschließenden Bereich parallel zur Höhenrichtung 6. Daran schließt sich ein konusartiger Verlauf des Schiebervorsprungs 30 mit einer auf das Bimetall 18 gerichteten Konusspitze an. Der Bereich der Konusspitze des Schiebervorsprungs 30 bildet die Kontaktfläche für das in Höhenrichtung 6 auslenkbare Bimetall 18. Aufgrund der besonderen Lagerung des Bimetalls 18 wird dessen mittlerer Bereich am stärksten ausgelenkt. Der mittlere Bereich ist deshalb in Aktivierungs- bzw. in Ruhestellung auch am stärksten gewölbt. Aus diesem Grund ist der in Querrichtung 5 gesehen etwa punktförmige Kraftangriff der Konusspitze des Schiebervorsprungs 30 am mittleren Bereich des Bimetalls 18 (Fig. 6,Fig. 7) sehr wirksam für eine große Kraftübertragung der Auslenkbewegungen des Bimetalls 18 auf den Schieber 27 geeignet.

Der zentrale Bereich des Schiebervorsprungs 30 ist in Querrichtung 5 von einer kreisrunden Schieberausnehmung 31 durchbrochen. In diese Schieberausnehmung 31 kann im Montageendzustand des Schutzschalters 1 ein dem Riegelkörper 28 zugeordneter zylinderförmiger Riegelzapfen 32 eingreifen. Auf der dem Bimetall 18 in Höhenrichtung 6 abgewandten Oberfläche des U-Grundes des Schiebers 27 sind entlang der Längsrichtung 4 insgesamt vier Schiebernoppen 33 angeformt. Die zwei äußersten Schiebernoppen 33 sind dabei im Bereich der U-Schenkel des Schiebers 27 angeordnet. Jede einzelne Schiebernoppe ist entlang der Längsrichtung 4 leicht abgerundet ausgestaltet. Zwischen den beiden inneren Schiebernoppen 33 befindet sich die Anschlagsnoppe 34. Sie ist entlang der Längsrichtung 4 ebenfalls leicht abgerundet ausgestaltet. In Höhenrichtung 6 ist sie kürzer ausgedehnt als die Schiebernoppen 33. Sie ist am U-Grund des Schiebers 27 der Konusspitze des Schiebervorsprungs 30 gegenüberliegend angeformt.

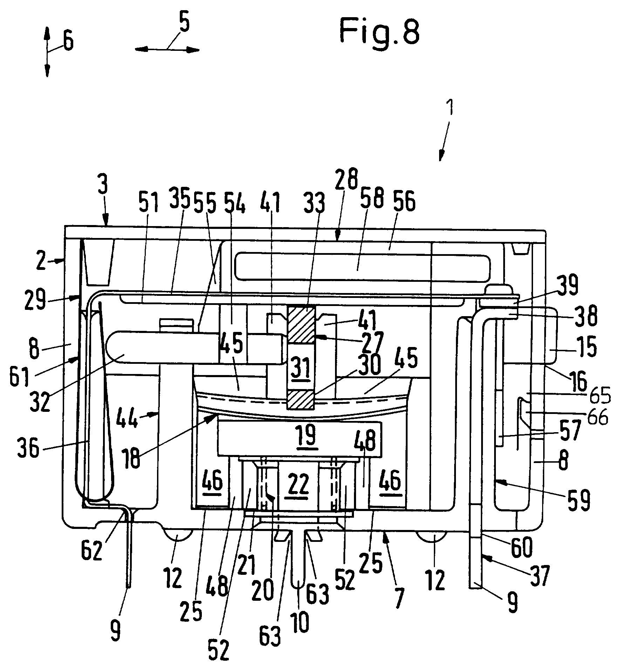

Die Anschlagsnoppe 34 dient während des Betriebes des Schutzschalters 1 als Rastanschlag für den Riegelzapfen 32, damit der Riegelkörper 28 während der Ruhestellung des Bimetalls 18 sicher in seiner Entriegelungsstellung verbleibt (Fig. 8).

Während der Verschiebung des Schiebers 27 beaufschlagen die Schiebernoppen 33 die einstückig mit den Verbraucheranschlüssen 9 verbundenen Kontaktbrücken 35 in Höhenrichtung 6, um die Verbraucherstromkreise zu unterbrechen.

Zwischen Verbraucher- und Steuerstromkreis darf kein Kurzschluß entstehen. Eine Bedienungsperson muß bei Berührung des Druckknopfes 15 vor spannungsführenden Teilen geschützt sein. Gleichzeitig müssen der Schieber 27 und der Riegelkörper 28 mechanisch stabil sein. Aus diesen Gründen sind die beiden vorgenannten Bauteile vorzugsweise aus einem stabilen Kunststoff hergestellt.

Die Kontaktbrücke 35 ist als Kontaktfeder ausgebildet und erstreckt sich mit einer im wesentlichen streifenartigen und rechteckigen Außenkontor in Querrichtung 5. Sie ist einstückig mit einer in Höhenrichtung 6 verlaufenden streifenartigen Brückenverlängerung 36 verbunden. Kontaktbrücke 35 und Brückenverlängerung 36 sind rechtwinklig voneinander abgebogen. In Längsrichtung weisen sie etwa die gleiche Ausdehnung auf. Die Brückenverlängerung 36 ist an ihrem der Kontaktbrücke 35 abgewandten Ende rechtwinklig in Richtung auf die Kontaktbrücke 35 abgebogen. An diesen abgebogenen Bereich der Brückenverlängerung 36 schließt sich der dazu wiederum rechtwinklig abgebogene Verbraucheranschluß 9 an. Der dem ersten Verbraucheranschluß 9 zugeordnete zweite Verbraucheranschluß 9 bildet das Ende eines streifenartigen, sich in Höhenrichtung 6 erstreckenden Kontaktstiftes 37. In seinem dem Verbraucheranschluß 9 zugewandten Endbereich ist der Kontaktstift 37 stufenförmig verjüngt. In seinem dem Verbraucheranschluß 9 abgewandten Endbereich ist der Kontaktstift 37 durch einen Festkontakt 38 verlängert. Der Festkontakt 38 ist gegenüber dem übrigen Bereich des Kontaktstiftes 37 rechtwinklig abgebogen und liegt in der durch die Längsrichtung 4 und die Querrichtung 5 gebildeten Ebene ein. Die der Kontaktbrücke 35 zugewandte Oberfläche des Festkontaktes 38 bildet die elektrische Kontaktfläche für einen nietartigen Bewegungskontakt 39. Der Bewegungskontakt 39 wird elektrisch leitend mit der Kontaktbrücke 35 verbunden, indem er an eine am Freiende der Kontaktbrücke 35 angeordnete kreisrunde Durchbrechung eingesetzt und dort angenietet oder angeschweißt ist. Damit der Verbraucherstromkreis innerhalb des Schutzschalters 1 geschlossen ist, drückt die Kontaktbrücke 35 mit ihrem in Höhenrichtung 6 wirksamen Federdruck die kreisrunde Kontaktfläche des Bewegungskontakts 39 gegen den Festkontakt 38.

Die in Fig. 4 dargestellten Bauteile des Schutzschalters 1 befinden sich in Fig. 5 in ihrem Montageendzustand innerhalb des Gehäuseschachtes 2. In Fig. 5 ist erkennbar, daß der Schutzschalter 1 hinsichtlich einer der Schnittlinie VIII-VIII entsprechenden Symmetrieachse im wesentlichen symmetrisch aufgebaut ist. Dies erleichtert die Herstellung des Schutzschalters 1 und vermindert die Montagezeit der einzelnen Bauteile. Diese Symmetrie ist auch eine Voraussetzung für die kompakte und schmale Bauweise des Schutzschalters 1.

An den beiden in Längsrichtung 4 verlaufenden Seitenwänden 8 sind jeweils zwei Hakenaussparungen 40 zum Einrasten der Federhaken 13 (Fig. 4) erkennbar. Im Bereich jeder Hakenaussparung 40 ist einstückig eine Fixiernase 65 an den Gehäuseschacht 2 angeformt (Fig. 4,Fig. 8). Beim Aufschieben des Gehäusedeckels 3 auf den Gehäuseschacht 2 gleiten die Federhaken 13 mit einstückig an ihren Freienden angeformten Hakennasen 66 (Fig. 8) über die Fixiernasen 65 entlang und hintergreifen sie. Gehäusedeckel 3 und Gehäuseschacht 2 sind dadurch miteinander verrastet, so daß ein versehentliches Abheben des Gehäusedeckels 2 verhindert wird.

Die vier Kontaktbrücken 35 sind in Querrichtung 5 verlaufend parallel zueinander angeordnet. Jeweils zwei Kontaktbrücken 35 befinden sich beiderseits des ebenfalls in Querrichtung 5 verlaufend angeordneten Riegelkörpers 28. Seine besondere Anordnung teilt den Gehäuseschacht 2 entlang der Längsrichtung 4 in zwei Hälften. Der Riegelkörper 28 weist etwa eine patronenartige Außenkontur auf. Hierbei bildet der Riegelzapfen 32 die Patronenspitze. Das dem Druckknopf 15 abgewandte und etwa halbkreisförmig abgerundete Ende des Riegelzapfens 32 schlägt an den ihm zugewandten Schenkel der Riegelfeder 29 an. Im Anschluß an das abgerundete Ende ist der Riegelzapfen 32 einseitig trichterförmig ausgespart. Der Druckknopf 15 steht mit seinem in Querrichtung 5 gesehen äußersten Bereich etwas aus der Druckknopf-Aufnahme 16 hinaus. Dadurch ist der Einschaltzustand des Schutzschalters 1 signalisiert. Das dem Druckknopf 15 zugewandte Ende des Riegelzapfens 32 ist gestrichelt dargestellt und schlägt an den in Längsrichtung 4 verlaufenden Schieber 27 an. Der an den Schieber 27 anschlagende Endbereich des Riegelzapfens 32 ist kegelstumpfartig sich in Richtung des Schiebers 27 verjüngend ausgestaltet.

Der Schieber 27 ist derart angeordnet, daß er den Gehäuseschacht 2 entlang der Querrichtung 5 in zwei Hälften teilt. Er tangiert mit seinen Seitenflächen die beiden in Querrichtung 5 verlaufenden Seitenwände 8. Der Schieber 27 ist hinsichtlich der parallel zur Längsrichtung 4 verlaufenden Schnittlinie VI-VI und hinsichtlich der parallel zur Querrichtung 5 verlaufenden Schnittlinie VIII-VIII im wesentlichen symmetrisch aufgebaut. Im Bereich des Schiebers 27 sind an den in Querrichtung 5 verlaufenden Seitenwänden 8 jeweils zwei Schieberstege 41 angeformt. Jeweils zwei Schieberstege 41 erstrecken sich entlang der Längsrichtung 4 derart in den Innenraum des Gehäuseschachtes 2, daß sie den an die Seitenwand 8 angrenzenden Endbereich des Schiebers 27 zwischen sich einschließen. Sie dienen der Bewegungsführung des Schiebers 27 während dessen Verschiebebewegungen in Höhenrichtung 6.

An den beiden in Längsrichtung 4 verlaufenden Seitenwänden 8 sind jeweils vier Trennstege 42 angeformt. Sie weisen eine rechteckige Außenkontur auf und erstrecken sich mit ihrer Längsseite in Querrichtung 5. Sie wirken als Trennwände und schirmen die einzelnen Verbraucherstromkreise innerhalb des Schutzschalters 1 voneinander ab. Hierzu weisen die den Bewegungskontakten 39 zugewandten Trennstege 42 dieselbe Aufbauhöhe wie der Gehäuseschacht 2 auf (Fig. 4). Die an der gegenüberliegenden Seitenwand 8 angeformten Trennstege 42 sind demgegenüber niedriger ausgebildet. Um auch in diesem Bereich eine gute Abschirmung der einzelnen Verbraucherstromkreise zu erreichen, schließen sich im Montageendzustand des Schutzschalters 1 am Gehäusedeckel 3 angeformte Trennstege 43 (Fig. 6) an die Trennstege 42 an. Jeweils ein Trennsteg 43 und der dazugehörige Trennsteg 42 weisen in Längsrichtung 4 dieselbe Materialstärke auf. Sie ergänzen sich entlang der Höhenrichtung 6 zu einer vollständigen Trennwand.

Die den Riegelzapfen 32 beiderseits tangierenden Trennstege 42 sind in ihrem der Seitenwand 8 entgegengesetzten Endbereich durch einen Lagerzapfen 44 miteinander verbunden. Er weist eine rechteckige Außenkontur auf (Fig. 5) und erstreckt sich ausgehend von dem Gehäuseboden 7 entlang der Höhenrichtung 6 in den Innenraum des Gehäuseschachtes 2. Er weist eine größere Aufbauhöhe als die mit ihm verbundenen Trennstege 42 auf (Fig. 4). In seinem dem Gehäusedeckel 3 zugewandten Endbereich ist er mit einem U-förmigen Einschnitt versehen, um den Riegelzapfen 32 in Querrichtung 5 verschieblich lagern zu können.

Im mittleren Bereich des Gehäuseschachtes 2 sind eine Mehrzahl von Lager- und Führungsstegen an der Innenseite des Gehäusebodens 7 angeformt. Sie erstrecken sich mit unterschiedlicher Aufbauhöhe in den Innenraum des Gehäuseschachtes 2. Sie dienen der Fixierung des Bimetalls 18, des Kontaktbügels 17, des Widerstandes 19 und der Druckfeder 20 in ihrem Montageendzustand sowie der Führung ihrer Verschiebe- bzw. Auslenkbewegungen. Die dem Gehäusedeckel 3 zugewandten Oberflächen der Führungs- und Lagerstege sind in Richtung auf das jeweilig zu fixierende Bauteil abgeschrägt ausgebildet. Der Lagerungsraum für das jeweilige Bauteil ist dadurch in Richtung auf den Gehäusedeckel 3 trichterförmig aufgeweitet und erleichtert die Montage der Bauteile.

Das Bimetall 18 ist formschlüssig von einem Fixiersteg 45 umfaßt. Hierbei sind die gewölbten Seitenkanten 26 des Bimetalls 18 den in Querrichtung 5 verlaufenden Seitenwänden 8 zugewandt. Die dementsprechend gewölbt verlaufenden Bereiche des Fixiersteges 45 sind im Bereich des Schiebers 27 unterbrochen. In diesen unterbrochenen Bereichen des Fixiersteges 45 liegen die beiden Federzungen 22,23 ein. An den Übergängen zwischen den gewölbten und den in Längsrichtung 4 verlaufenden Anteilen des Führungssteges 45 schließen sich einstückig die im Bereich der Hakenaussparungen 40 vorhandenen Trennstege 42 an.
Die in Längsrichtung 4 verlaufenden Anteile des Führungssteges 45 sind im Bereich der sie kreuzenden inneren Trennstege 42 ebenfalls unterbrochen. An die gewölbten Anteile des Fixiersteges 45 ist jeweils ein Fixierfortsatz 46 angeformt. Die Fixierfortsätze 46 dehnen sich in Richtung auf den zentral im Gehäuseschacht 2 einliegenden Widerstand 19 aus und verkleinern dadurch den durch den gesamten Fixiersteg 45 begrenzten Innenraum etwas. Die Fixierfortsätze 46 tangieren die sich unmittelbar an die Federzungen 22,23 anschließenden Seiten des sechseckigen Rahmens 25 im Bereich der Außenkanten. Zusätzlich zu dieser Fixierung ist der Kontaktbügel 17 durch den einen etwa rechteckigen Anschlußschlitz 47 des Gehäusebodens 7 durchgreifenden Steueranschluß 10 im Gehäuseschacht 2 fixiert.
Das Bimetall 18 überdeckt den Bügelrahmen 25 in Längsrichtung 4. In Querrichtung 5 dagegen weisen Bimetall 18 und Bügelrahmen 25 im Bereich seiner federzungenfernen Seiten gleiche Ausdehnungen auf.

Der Widerstand 19 ist von zwei ringsegmentartigen Fixierstegen 48 formschlüssig ummantelt. Die beiden Fixierstege 48 sind in Längsrichtung 4 einander gegenüberliegend angeordnet und mit ihren Konkavseiten einander zugewandt. Sie fixieren dabei im wesentlichen nur die den in Querrichtung 5 verlaufenden Seitenwänden 8 zugewandten Bereiche des Widerstandes 19.

In Fig. 6 ist erkennbar, daß die Kontaktbrücken 35 in einzelnen, von den Trennstegen 43 abgetrennten Kammern 49 einliegen. Zwischen den beiden dem Riegelkörper 28 zugewandten Kammern 49 liegt der Riegelkörper 28 in einer separaten Kammer 50 ein.

In Querrichtung 5 betrachtet sind die Kontaktbrücken 35 an ihren den Schiebernoppen 33 zugewandten Oberflächen mit etwa halbkreisförmigen Brückenversteifungen 51 versehen. Dabei ist die Konvexseite der Brückenversteifung 51 der zugeordneten Schiebernoppe 33 zugewandt. Die Brückenversteifung 51 erstreckt sich in Querrichtung 5 über den größten Bereich der Kontaktbrücke 35 (Fig. 8) und ist vorzugsweise als Ausbeulung der Kontaktbrückenoberfläche einstückig mit dieser hergestellt. Die Brückenversteifungen 51 werden von den Schiebernoppen 33 bei in Richtung des Gehäusedeckels 3 verschobenen Schieber 27 beaufschlagt, um die Verbraucherstromkreise zu unterbrechen.

In Fig. 6 sind die Verbraucherstromkreise geschlossen. Die Freienden der U-Schenkel des Schiebers 27 liegen an der Innenseite des Gehäusebodens 7 an. Zwischen den Brückenversteifungen 51 und den Schiebernoppen 33 befindet sich deshalb ein kleiner Luftspalt.

In Fig. 6 ist der Strompfad des Steuerstromkreises innerhalb des Schutzschalters 1 erkennbar. Die beiden Federzungen 22,23 sind in Richtung des Widerstandes 19 vorgespannt. Dieser Federdruck bewirkt, daß das in den Kerben 24 gelagerte Bimetall 18 gewölbt ist. Hierbei kontaktiert das Bimetall 18 mit dem zentralen Bereich seiner Konvexseite den Widerstand 19. In dieser Ruhestellung des Bimetalls 18 befindet sich zwischen diesem und der Konusspitze des Schiebervorsprunges 30 ein Luftspalt. Die dem Bimetall 18 und der Druckfeder 20 zugewandten Oberflächen des Widerstandes 19 sind elektrisch leitend ausgebildet. Die Druckfeder 20 stützt sich aufgrund ihrer in Höhenrichtung 6 wirksamen Federkraft mit ihren beiden Federenden am Widerstand 19 bzw. an dem elektrisch leitenden Federlager 21 ab. Die Druckfeder 20 ist zumindest teilweise entlang ihres Außenumfanges von einem an der Innenseite des Gehäusebodens 7 angeformten Fixiersteg 52 formschlüssig umgeben. Dadurch ist die Druckfeder 20 ausreichend stabil gelagert. Aufgrund der Federkraft der Druckfeder 20 ergibt sich ein permanent guter elektrischer Kontaktdruck mit dem Widerstand 19 und dem Federlager 21. Ein beispielsweise an den Steueranschluß 10 eingespeister Steuerstrom fließt über die Federzunge 22 bzw. über den Bügelrahmen 25 und die Federzunge 23 in das Bimetall 18. Vom Bimetall 18 aus fließt der Steuerstrom über den Widerstand 19, über die Druckfeder 20 und über das Federlager 21 in den Steueranschluß 11. Das Federlager 21 ist durch einen vom Steueranschluß 11 durchgriffenen Anschlußschlitz 64 am Gehäuseboden 7 orstfest fixiert. In Fig. 6 und Fig. 7 ist erkennbar, daß der Schutzschalter 1 hinsichtlich einer parallel zur Höhenrichtung 6 verlaufenden und die Konusspitze des Schiebervorsprunges 30 durchstoßenden Symmetrieachse 53 im wesentlichen symmetrisch aufgebaut ist.

In Fig. 7 befindet sich das Bimetall 18 in seiner Aktivierungsstellung. Aufgrund des in Längsrichtung 4 wirksamen Federdrucks der Federzungen 22,23 arbeitet das Bimetall 18 als Schnappscheibe und wird mit seinem mittleren Bereich in Richtung des Schiebervorsprunges 30 ausgelenkt. Die Auslenkbewegung wird durch den Federdruck der Druckfeder 20 zusätzlich unterstützt. Das Bimetall 18 beaufschlagt die Konusspitze des Schiebervorsprunges 30 und bewegt dadurch den Schieber 27 in Richtung des Gehäusedeckels 3. Die Freienden der U-Schenkel des Schiebers 27 liegen nicht mehr an der Innenseite des Gehäusebodens 7 an. Der Schieber 27 wiederum beaufschlagt mit seinen Schiebernoppen 33 die Brückenversteifungen 51 in Kontaktöffnungsrichtung der Kontaktbrücken 35. Die Kontaktbrücken 35 befinden sich deshalb in Fig. 7 in ihrer Kontaktöffnungsstellung. In dieser Stellung ist der elektrische Kontakt zwischen den Festkontakten 38 und den zugehörigen Bewegungskontakten 39 unterbrochen, so daß auch der Verbraucherstromkreis unterbrochen ist.

In Fig. 7 befindet sich der Schieber 27 in seiner Verriegelungsstellung. Hierbei ist er durch den in die Schieberausnehmung 31 eingreifenden Riegelzapfen 32 verriegelt.

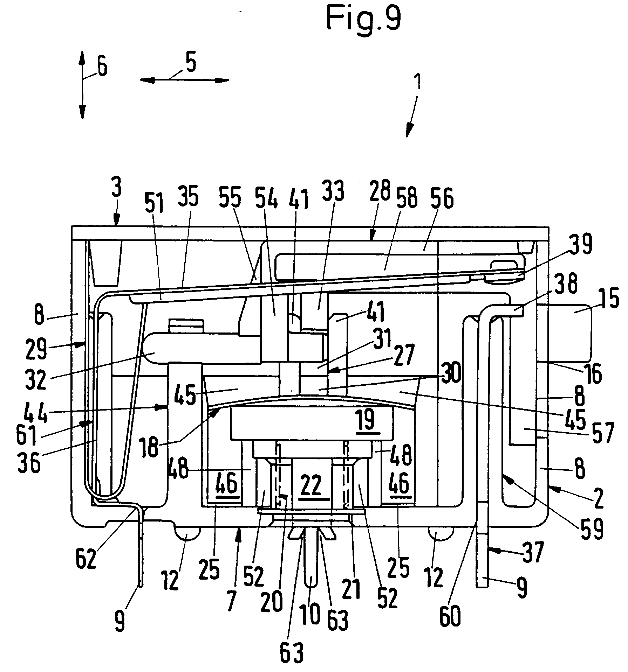

In Fig. 8 und Fig. 9 ist die Wirkung der Verriegelungseinrichtung erkennbar.
Der Riegelkörper 28 ist aufgrund des den Lagerzapfen 44 durchgreifenden Riegelzapfens 32 und aufgrund des die Druckknopf-Aufnahme 16 durchgreifenden Druckknopfes 15 im Gehäuseschacht 2 verschiebbar gelagert. Durch die besondere Lagerung kann der Riegelkörper 28 Verschiebebewegungen nur in Querrichtung 5 vollführen. Die Riegelfeder 29 beaufschlagt das ihr zugewandte Ende des Riegelzapfens 32 mit dem Bereich des Freiendes ihres kürzeren U-Schenkels in Richtung der Schieberausnehmung 31. Da sich der Schieber 27 in seiner Entriegelungsstellung befindet, ist der Riegelzapfen 32 zwischen dem in Richtung der Schieberausnehmung 31 vorgespannten U-Schenkel der Riegelfeder 29 und dem Schieber 27 eingeklemmt. Der längere der beiden U-Schenkel der Riegelfeder 29 ist an der Innenseite der Seitenwand 8 fixiert und dehnt sich ausgehend von dem Bereich des Gehäusebodens 7 bis zur Aufbauhöhe des Gehäuseschachtes 2 aus. Der längere U-Schenkel verläuft exakt in Höhenrichtung 6, während der kürzere U-Schenkel gegenüber der Höhenrichtung 6 in Richtung des längeren U-Schenkels geneigt verläuft.

Zwischen dem Lagerzapfen 44 und dem Schieber 27 ist am Riegelzapfen 32 ein rechtwinklig davon abstehender und in Richtung des Gehäusedeckels 3 verlaufender Zapfenhalter 54 angeformt. An den Zapfenhalter 54 ist auf der dem Lagerzapfen 44 zugewandten Seite eine Begrenzungsnase 55 angeformt. Sie verläuft ausgehend vom an die Innenseite des Gehäusedeckels 3 reichenden Endbereich des Zapfenhalters 54 in Richtung des Lagerzapfens 44 gegenüber der Höhenrichtung 6 schräg geneigt. Zwischen der Begrenzungsnase 55 und dem Lagerzapfen 44 befindet sich ein kleiner Spalt. Die Begrenzungsnase 55 kann dazu verwendet werden, eine ungewollte übermäßige Verschiebung des Riegelkörpers 28 in Richtung der Riegelfeder 29 zu verhindern, indem die Begrenzungsnase 55 am Lagerzapfen 44 anschlägt. Dadurch ist die Riegelfeder 29 vor übermäßigen Biegebeanspruchungen geschützt. Der Zapfenhalter 54 ist durch eine parallel zum Gehäusedeckel 3 verlaufenden und letzteren mit seiner ihm zugewandten Oberfläche tangierenden Verbindungsschiene 56 und durch eine an der Verbindungsschiene 56 angeformte Schienenverlängerung 57 mit dem Druckknopf 15 verbunden. Die Verbindungsschiene 56 weist eine im wesentlichen rechteckige Außenkontur auf. In etwas verkleinertem Maßstab zu dieser Außenkontur ist die Verbindungsschiene 56 mit einer etwa rechteckigen Schienenausnehmung 58 versehen. Da der Riegelkörper 28 hinsichtlich der Symmetrieachse 53 (Fig. 6, Fig. 7) symmetrisch ist, enthält er in Längsrichtung 4 hintereinanderliegend zwei dieser Schienenausnehmungen 58. Zapfenhalter 54 und Schienenverlängerung 57 verlaufen parallel zueinander. Die Schienenverlängerung 57 ist dabei in Richtung des Gehäusebodens 7 länger ausgedehnt. In Querrichtung 5 betrachtet begrenzen der Zapfenhalter 54 und die Schienenverlängerung 57 die Ausdehnung der Verbindungsschiene 56. Zapfenhalter 54 und Schienenverlängerung 57 weisen in Querrichtung 5 etwa die gleiche Materialstärke auf. Etwa im mittleren Bereich der Ausdehnung der Schienenverlängerung 57 in Höhenrichtung 6 ist der Druckknopf 15 angeformt. Druckknopf 15, Schienenverlängerung 57, Verbindungsschiene 56, Zapfenhalter 54 und Begrenzungsnase 55 sind vorzugsweise einstückig hergestellt. Der Riegelzapfen 32 kann ebenfalls einstückiger Bestandteil des Riegelkörpers 28 sein. Es ist aber auch denkbar, den Riegelzapfen 32 separat herzustellen.

Der Strompfad des Verbraucherstromkreises innerhalb des Schutzschalters 1 ist in Fig. 8 geschlossen. Die Kontaktbrücke 35 befindet sich in ihrer Kontaktschließstellung. Hierbei liegen Bewegungskontakt 39 und Festkontakt 38 elektrisch kontaktiert aneinander an. Der Kontaktstift 37 ist von einer gehäusefesten und in Höhenrichtung 6 verlaufenden Fixierschiene 59 formschlüssig umgeben. Sie befindet sich im dem Druckknopf 15 zugewandten Randbereich des Gehäuseschachtes 2 und ist an der Innenseite des Gehäusebodens 7 angeformt. Die Fixierschiene 59 bewirkt einen mechanischen Beschädigungsschutz sowie einen Kontaktschutz vor versehentlichen elektrischen Berührungen mit anderen Bauteilen. In dem dem Festkontakt 38 zugewandten Endbereich ist die Fixierschiene 59 trichterartig aufgeweitet, um die Montage des Kontaktstiftes 37 zu erleichtern. Die Fixierschiene 59 ist in Höhenrichtung 6 durch einen den Gehäuseboden 7 unterbrechenden Anschlußschlitz 60 verlängert und in diesem Bereich vom Verbraucheranschluß 9 durchgriffen.

Analog zu den vorgenannten Ausführungen ist die Brückenverlängerung 36 in einer an die dem Riegelzapfen 32 zugewandten Seitenwand 8 angeformten Fixierschiene 61 im Montageendzustand ortsfest fixiert. Diese Fixierung wird von einem Anschlußschlitz 62 noch unterstützt, welcher von dem mit der Kontaktbrücke 35 einstückig verbundenen Verbraucheranschluß 9 durchgriffen ist.

Das Bimetall 18 befindet sich in Fig. 8 in seiner Ruhestellung. In Fig. 8 wie in Fig. 6 ist das Bimetall 18 mit seiner Konvexseite dem Widerstand 19 zugewandt. Das Bimetall 18 ist deshalb mit dem Mantelsegment einer Kugel vergleichbar, welches mit seinem mittleren Flächenbereich in Ruhestellung (Fig. 6, Fig. 8) den Widerstand 19 beaufschlagt und in Aktivierungsstellung (Fig. 7, Fig. 9) den Schiebervorsprung 30 beaufschlagt.

In Fig. 9 befindet sich das Bimetall 18 in seiner Aktivierungsstellung. Die Auslenkbewegung des Bimetalls 18 wird durch die sich aufgrund ihres Federdrucks in Höhenrichtung 6 ausdehnende Druckfeder 20 unterstützt. Der Schieber 27 wird hierbei in Kontaktöffnungsrichtung der Kontaktbrücke 35 verschoben, so daß der Strompfad innerhalb des Verbraucherstromkreises unterbrochen wird. Gleichzeitig wird die Schieberausnehmung 31 in Höhenrichtung 6 derart verschoben, daß der Riegelkörper 28 aufgrund des Federdrucks der Riegelfeder 29 in Richtung der dem Druckknopf 15 zugewandten Seitenwand 8 verschoben wird. Diese Verschiebebewegung des Riegelkörpers 28 ist durch die an die Seitenwand 8 anschlagende Schienenverlängerung 57 begrenzt. Der Druckknopf 15 steht mit seinem weitaus größten Volumenbereich aus dem Gehäuseschacht 2 hinaus und signalisiert dadurch den Ausschaltzustand des Schutzschalters 1. Die Schaltstellungen des Druckknopfes 15 können noch verbessert visualisiert werden, wenn die Mantelflächen des Druckknopfes 15 mit einer besonderen Signalfarbe versehen sind.

Die vorgenannte Verschiebebewegung des Riegelkörpers 28 ist dadurch ermöglicht, daß der Riegelzapfen 32 mit seinem der Riegelfeder 29 abgewandten Endbereich in die Schieberausnehmung 31 eingreift. Die als Blattfeder wirksame Riegelfeder 29 ist in der Verriegelungsstellung des Schiebers 27 zumindest teilweise entspannt.

Die Funktionsweise des Schutzschalters 1 sei anhand von Fig. 6 - Fig. 9 erläutert. In Fig. 6 und in Fig. 8 befindet sich der Schutzschalter 1 in seinem Einschaltzustand. Für eine Bedienerperson ist dies durch den mit seinem Volumen nur minimal aus dem Gehäuseschacht 2 hinausstehenden Druckknopf 15 visualisiert. Im Einschaltzustand des Schutzschalters 1 ist die Kontaktbrücke 35 mit dem Kontaktstift 37 elektrisch leitend verbunden (Fig. 8). Der Schieber 27 befindet sich in seiner Entriegelungsstellung (Fig. 6). Eine hier nicht dargestellte Steuereinrichtung ist an die Steueranschlüsse 10,11 angeschlossen und erzeugt bei Überschreiten des Grenzwertes einer gemessenen physikalischen Größe einen Steuerstrom. Der Steuerstrom erwärmt das Bimetall 18 und den Widerstand 19. Der Widerstand 19 kann seine Wärmeenergie an das Bimetall 18 abgeben, so daß das Bimetall 18 in kürzerer Zeit seine Aktivierungsstellung (Fig. 7, Fig. 9) erreichen kann. Aufgrund der besonderen Lagerung des Bimetalls 18 wird im wesentlichen nur sein mittlerer Flächenbereich in Richtung des Schiebers 27 ausgelenkt. Das Bimetall 18 arbeitet folglich als Schnappscheibe, wodurch es seine Auslenkbewegung besonders wirksam auf den Schiebervorsprung 30 übertragen kann. Bei dieser Auslenkbewegung unterschreitet das Bimetall 18 seine Haltekraft zur Kompression der Druckfeder 20 (Fig. 6) derart, daß diese sich in Höhenrichtung 6 ausdehnen kann (Fig. 7) und mit ihrem Federdruck die Auslenkbewegung des Bimetalls 18 unterstützt. Mit diesen Maßnahmen ist die Ansprechzeit des Schutzschalters 1 extrem verkürzt. Außerdem wird mit einfachen Mitteln eine große Kraft zur Beeinflussung des Auslösemechanismus erzeugt.

Die Kontaktbrücke 35 erzeugt durch ihre Vorspannung in Kontaktschließrichtung (Fig. 8) einen permanent guten Kontaktdruck zwischen Festkontakt 38 und Bewegungskontakt 39. Der Schieber 27 beaufschlagt aufgrund des ausgelenkten Bimetalls 18 die Kontaktbrücke entgegen ihrer Vorspannung in Kontaktöffnungsrichtung. In Fig. 7 befindet sich die Kontaktbrücke 35 deshalb in ihrer Kontaktöffnungsstellung. Der Riegelzapfen 32 greift zur Verriegelung des Schiebers 27 in die Schieberausnehmung 31 ein. Der Riegelkörper 28 ist hierbei in Richtung des Kontaktstiftes 37 derart verschoben, daß der Druckknopf 15 weitestgehend aus dem Gehäuseschacht 2 heraussteht und dadurch der Bedienungsperson den Ausschaltzustand des Schutzschalters 1 signalisiert.

Das Bimetall 18 bleibt auch in seiner Aktivierungsstellung (Fig. 7, Fig. 9) mit der ihm zugewandten elektrisch leitenden Oberfläche des Widerstandes 19 kontaktiert. Durch den Federdruck der Druckfeder 20 bleibt deshalb auch in der Aktivierungsstellung des Bimetalls 18 ein guter elektrischer Kontaktdruck zwischen Bimetall 18, Widerstand 19, Druckfeder 20 und Federlager 21 erhalten. Auf diese Weise ist der Steuerstromkreis innerhalb des Gehäuseschachtes 2 immer zuverlässig geschlossen. Bei vorhandenem Steuerstrom verbleibt das Bimetall 18 deshalb immer in seiner Aktivierungsstellung (Fig. 7, Fig. 9) und beaufschlagt mit Unterstützung der Druckfeder 20 den Schieber 27 in Richtung des Gehäusedeckels 3. Der Verbraucherstromkreis bleibt deshalb unterbrochen, auch wenn durch manuelle Betätigung des Druckknopfes 15 versucht wird, den Einschaltzustand des Schutzschalters 1 herzustellen. Dies ist ein wirksamer Schutz für den elektrischen Verbraucher, da auf diese Weise bei Überschreiten des Grenzwertes der gemessenen physikalischen Größe der Verbraucherstromkreis nie geschlossen werden kann.

Ist der Steuerstrom nicht mehr vorhanden, so schnappt das Bimetall 18 bei einem bestimmten Grad der Abkühlung in Richtung seiner Ruhestellung um (Fig. 6, Fig. 8). Hierbei erzeugt das Bimetall 18 während seiner Abkühlung eine auf den Gehäuseboden 7 gerichtete Kraft. Diese Kraft überwindet ab einem bestimmten Betrag die dazu entgegengesetzte, von der Druckfeder 20 erzeugte Federkraft. Auf diese Weise werden der Widerstand 19 und die Druckfeder 20 in ihre Ausgangsstellung zurückgedrängt (Fig. 6, Fig. 8). In diesem Fall wird der Schieber 27 nur durch den in ihn eingreifenden Endbereich des Riegelzapfens 32 in seiner Verriegelungsstellung gehalten. Durch Betätigung des Druckknopfes 15 wird der Riegelzapfen 32 unter Überwindung der von der Riegelfeder 29 erzeugten Federkraft aus der Schieberausnehmung 31 herausgeschoben. Der Schieber 27 wird aufgrund seiner Schwerkraft und der in Kontaktschließrichtung vorgespannten Kontaktbrücke 35 in Richtung auf den Gehäuseboden 7 verschoben. Dem Federdruck der Kontaktbrücke 35 wirkt keine Kraft mehr entgegen, so daß der Strompfad des Verbraucherstromkreises innerhalb des Gehäuseschachtes 2 wieder geschlossen wird (Fig. 8).

In einer weiteren Version des Schutzschalters 1 ist es vorgesehen, keinen Riegelkörper 28 zu verwenden. In diesem Fall ergibt sich eine zyklische Arbeitsweise des Schutzschalters 1. Der Schaltzustand des Schutzschalters 1 ist dann allein von der Stellung des Bimetalls 18 abhängig. Mit Hilfe des Riegelkörpers 28 ist das Erreichen des Einschaltzustandes des Schutzschalters 1 zusätzlich von der Entriegelung des Schiebers 27 abhängig. Sobald sich das Bimetall 18 wieder in seiner Ruhestellung befindet, kann eine Bedienerperson über den Druckknopf 15 lediglich den genauen Zeitpunkt des Wiedereinschaltens des Schutzschalters 1 beeinflussen.

Die Richtungen sämtlicher von den Federn erzeugter Kräfte sowie der Verschiebe- bzw. Auslenkbewegungen der Bauteile innerhalb des Gehäuseschachtes 2 sind parallel bzw. senkrecht zueinander angeordnet. Dies ist eine wichtige Voraussetzung für die kompakte und schmale Bauweise des Schutzschalters 1. Außerdem sind hierdurch mit konstruktiv einfach ausgestalteten Bauteilen sehr wirksame Kraftübertragungen möglich. Wegen der einfachen Technik kann der Schutzschalter 1 einerseits kostensparend hergestellt werden. Andererseits gewährleistet die einfache Technik eine sehr zuverlässige Arbeitsweise des Schutzschalters 1. Die Federzungen 22,23, das Bimetall 18, der Widerstand 19 und die Druckfeder 20 haben mechanische Lagerungsfunktionen und gleichzeitig elektrische Leitungsfunktionen. Diese Kombination bewirkt eine erhebliche Reduzierung notwendiger Bauteile innerhalb des Schutzschalters 1. Aufgrund der Federdrücke der Federzungen 22,23 sowie der Druckfeder 20 sind Bimetall 18 und Widerstand 19 auf sehr einfache Weise stabil gelagert. Die stabile Lagerung wiederum bewirkt einen permanent guten elektrischen Kontaktdruck zwischen den den Strompfad des Steuerstromkreises bildenden Bauteilen.

Die Möglichkeiten der Verknüpfung der mechanischen Lagerung und einer gleichzeitig erfolgenden elektrischen Kontaktierung verschiedener Bauteile ist bei dieser Erfindung auf technisch einfache Weise sehr wirksam ausgenutzt.

### Bezugszeichenliste

- 1: Schutzschalter
- 2: Gehäuseschacht
- 3: Gehäusedeckel
- 4: Längsrichtung
- 5: Querrichtung
- 6: Höhenrichtung
- 7: Gehäuseboden
- 8: Seitenwand
- 9: Verbraucheranschluß
- 10: Steueranschluß
- 11: Steueranschluß
- 12: Abstandsnoppe
- 13: Federhaken
- 14: Knopf-Fixiersteg
- 15: Druckknopf
- 16: Druckknopf-Aufnahme
- 17: Kontaktbügel
- 18: Bimetall
- 19: Widerstand
- 20: Druckfeder
- 21: Federlager
- 22: Federzunge
- 23: Federzunge
- 24: Kerbe
- 25: Bügelrahmen
- 26,26': Seitenkante
- 27: Schieber
- 28: Riegelkörper
- 29: Riegelfeder
- 30: Schiebervorsprung
- 31: Schieberausnehmung
- 32: Riegelzapfen
- 33: Schiebernoppe
- 34: Anschlagsnoppe
- 35: Kontaktbrücke
- 36: Brückenverlängerung
- 37: Kontaktstift
- 38: Festkontakt
- 39: Bewegungskontakt
- 40: Hakenaussparung
- 41: Schiebersteg
- 42: Trennsteg
- 43: Trennsteg
- 44: Lagerzapfen
- 45: Fixiersteg
- 46: Fixierfortsatz
- 47: Anschlußschlitz
- 48: Fixiersteg
- 49: Kammer
- 50: Kammer
- 51: Brückenversteifung
- 52: Fixiersteg
- 53: Symmetrieachse
- 54: Zapfenhalter
- 55: Begrenzungsnase
- 56: Verbindungsschiene
- 57: Schienenverlängerung
- 58: Schienenausnehmung
- 59: Fixierschiene
- 60: Anschlußschlitz
- 61: Fixierschiene
- 62: Anschlußschlitz
- 63: Anschlußkerbe
- 64: Anschlußschlitz
- 65: Fixiernase
- 66: Hakennase

- K: Klemmenkasten
- M: Pumpenmotor
- L1,L2,L3: Anschlußklemmen
- a,b: Störmeldekontakte
- N: Netzteil
- A: Steuer- und Auswerteelektronik
- T: Thyristor
- R1: Temperatursensor
- H: Sensor
- LE: Kontrolleuchte
- LE2: Meldeleuchte
- C3,C4,C14: Kondensatoren
- D1,D2,D4: Dioden
- R6: temperaturabhängiger Widerstand (PCT)
- R1.1, R1.2, R1.3, R1.4, R3, R5, R7: Widerstände
- R9: Parallelwiderstand
- U1: Spannungsregler
- U2,U3: Operationsverstärker

## Patentansprüche

1. Schutzeinrichtung
- mit mindestens einem ein elektrisches Meßsignal an einen Steuerstromkreis ausgebenden Sensor (H, R1), insbesondere zum Erfassen des Betriebszustandes eines elektrischen Verbrauchers, insbesondere eines Kreiselpumpen-, Spaltrohrpumpen- oder Lüftermotors (M),
- mit einem an eine allgemeine Stromversorgung anschließbaren Netzteil (N) zur Versorgung der Steuerelektronik (A),
- mit einem bimetallgesteuerten Schutzschalter (1) und
- mit einem vom Steuerstrom durchflossenen, das Bimetall (18) zur Unterbrechung des Verbraucherstromkreises aktivierenden, temperaturabhängigen Widerstand (19),
wobei die beiden Stromkreise innerhalb des Schutzschalters (1) voneinander elektrisch getrennt sind,
dadurch gekennzeichnet,
daß das Bimetall (18)
- unter in seiner Auslenkrichtung wirksamem Federdruck mechanisch und elektrisch kontaktiert am Widerstand (19) anliegt und
- durch diese Kontaktierung innerhalb des Steuerstromkreises mit dem Widerstand (19) elektrisch in Reihe geschaltet ist.

2. Schutzeinrichtung nach Anspruch 1,
dadurch gekennzeichnet,
daß der Eingangsstrom des Netzteils (N) durch einen temperaturabhängigen Widerstand, insbesondere einen Kaltleiter, begrenzt ist.

3. Schutzeinrichtung nach Anspruch 1 oder 2,
dadurch gekennzeichnet,
daß sie innerhalb des Klemmenkastens (K) des elektrischen Verbrauchers angeordnet ist.

4. Schutzeinrichtung nach Anspruch 1, 2 oder 3,
dadurch gekennzeichnet,
daß der Sensor (R1) die Temperatur des elektrischen Verbrauchers, insbesondere die Wicklungstemperatur, erfaßt.

5. Schutzeinrichtung nach einem oder mehreren der vorhergehenden Ansprüche,
dadurch gekennzeichnet,
daß der Sensor als Shunt, als Hallelement oder als Stromtrafo zum Erfassen des von dem elektrischen Verbraucher aufgenommenen Stromes ausgebildet ist.

6. Schutzeinrichtung nach einem oder mehreren der vorhergehenden Ansprüche,
dadurch gekennzeichnet,
daß der Sensor mit einem Mikroprozessor oder ASIC verbunden ist, der das Signal zur Unterbrechung des Verbraucherstromkreises abgibt.

7. Schutzeinrichtung nach einem oder mehreren der vorhergehenden Ansprüche,
dadurch gekennzeichnet,
daß der Schutzschalter (1) einen zusätzlichen Kontakt aufweist, über den bei ausgelösten Schutzschalter (1) ein Meldesignal auslösbar ist.

8. Schutzeinrichtung nach einem oder mehreren der vorhergehenden Ansprüche,
dadurch gekennzeichnet,
daß das Bimetall (18) unmittelbar am Widerstand (19) anliegt.

9. Schutzeinrichtung nach Anspruch 1 oder 8,
dadurch gekennzeichnet,
daß der Widerstand (19) ein PTC-Widerstand ist.

10. Schutzeinrichtung nach einem der Ansprüche 1, 8 oder 9,
gekennzeichnet durch
eine im wesentlichen parallele Aneinanderlage von Widerstand (19) und Bimetall (18).

11. Schutzeinrichtung nach einem oder mehreren der vorhergehenden Ansprüche,
dadurch gekennzeichnet,
daß die den Federdruck erzeugende Druckfeder (20) elektrisch kontaktierend am Widerstand (19) anliegt und dadurch mit dem Widerstand (19) und dem Bimetall (18) elektrisch in Reihe geschaltet ist.

12. Schutzeinrichtung nach einem oder mehreren der vorhergehenden Ansprüche,
dadurch gekennzeichnet,
daß die Druckfeder (20) eine Schraubenfeder ist, die sich
- mit ihrem einen Ende am Widerstand (19) und
- mit ihrem anderen Ende kontaktierend an einem Anschlußkontakt (21) des Steuerstromkreises abstützt.

13. Schutzeinreichtung nach einem oder mehreren der vorhergehenden Ansprüche,
dadurch gekennzeichnet,
daß das Bimetall (18) mit zwei einander diametral gegenüberliegenden Seiten (26,26') gehäusefest gelagert und etwa mittig dazwischen am Widerstand (19) anliegt.

14. Schutzeinrichtung nach Anspruch 13,
dadurch gekennzeichnet,
daß das Bimetall (18) mit den Seiten (26,26') unter diametral wirksamem Federdruck zwischen zwei Federzungen (22,23) gehalten ist.

15. Schutzeinrichtung nach Anspruch 14,
dadurch gekennzeichnet,
daß die Federzungen (22,23) die Schenkel eines U-förmigen, vom Steuerstrom durchflossenen Kontaktbügels (17) sind.

16. Schutzeinrichtung nach einem der Ansprüche 13 bis 15,
dadurch gekennzeichnet,
daß das Bimetall (18) mit seinen schneidenartigen Seiten (26,26') in zu einer Kerbe (24) geformten Flankenbereichen der Federzungen (22,23) einliegt.

17. Schutzeinrichtung nach einem oder mehreren der vorhergehenden Ansprüche,
dadurch gekennzeichnet,
daß das Bimetall (18) eine in Kontaktschließrichtung unter Federdruck stehende Kontaktbrücke (35) des Verbraucherstromkreises in Kontaktöffnungsrichtung beaufschlagt.

18. Schutzeinrichtung nach Anspruch 17,
gekennzeichnet durch
einen zwischen Bimetall (18) und Kontaktbrücke (35) einliegenden Schieber (27) als Übertragungsmittel für den Öffnungsdruck.

19. Schutzeinrichtung nach Anspruch 18,
dadurch gekennzeichnet,
daß der Schieber (17) gehäusegelagert ist.

20. Schutzeinrichtung nach einem oder mehreren der vorhergehenden Ansprüche,
dadurch gekennzeichnet,
daß die Schubrichtung (6) in Druckrichtung der Federn (35,20) verläuft.

21. Schutzeinrichtung nach Anspruch 17,
dadurch gekennzeichnet,
daß die Kontaktbrücke (35) eine in Kontaktschließrichtung vorgespannte Kontaktfeder ist.

22. Schutzeinrichtung nach Anspruch 21,
dadurch gekennzeichnet,
daß die Kontaktfeder (35) gehäusefest eingespannt ist.

23. Schutzeinrichtung nach einem oder mehreren der vorhergehenden Ansprüche,
dadurch gekennzeichnet,
daß mehrere Kontaktbrücken (35) zur Bildung eines mehrpoligen Schutzschalters (1) nebeneinander angeordnet und gemeinsam vom Schieber (27) beaufschlagt sind.

24. Schutzeinrichtung nach Anspruch 23,
gekennzeichnet durch
eine Parallellage der Kontaktbrücken (35).

25. Schutzeinrichtung nach einem oder mehreren der vorhergehenden Ansprüche,
gekennzeichnet durch
eine
- bei aktiviertem Bimetall (18) den Schieber (27) und die Kontaktbrücke (35) in Kontaktöffnungsstellung haltende und
- unter in Verriegelungsrichtung wirksamem Riegelfederdruck (29) stehende Verriegelungseinrichtung (32) des Schutzschalters (1).

26. Schutzeinrichtung nach Anspruch 25,
dadurch gekennzeichnet,
daß die Verriegelungseinrichtung (32) ein in eine Schieberausnehmung (31) eingreifender, gehäusegelagerter Riegelzapfen ist.

27. Schutzeinrichtung nach Anspruch 25 oder 26,
dadurch gekennzeichnet,
daß die Riegelfeder (29) eine sich an einer Gehäusewand (8) des Schutzschalters (1) abstützende Blattfeder ist.

28. Schutzeinrichtung nach Anspruch 27,
gekennzeichnet durch
eine U-Form der Riegelfeder (29), die mit den Außenflanken ihrer U-Schenkel zwischen einer Gehäusewand (8) und dem schieberfernen Riegelzapfenende eingespannt ist.

29. Schutzeinrichtung nach einem oder mehreren der vorhergehenden Ansprüche,
dadurch gekennzeichnet,
daß ein etwa rechtwinklig zur Verriegelungsrichtung des Riegelzapfens (32) abstehender Ausleger (54) einen in Verriegelungsrichtung ausgerichteten Druckstößel (56,57) aufweist, der mit seinem als Druckknopf (15) dienenden Ende durch eine Gehäusewandöffnung (16) des Schutzschalters (1) derart hindurchsteht, daß der Riegelzapfen (32) durch Druckknopfbeaufschlagung unter Kompression der Riegelfeder (29) entriegelbar ist.

## Claims

1. A protective device
- having at least one sensor (H,R1), which outputs an electrical measurement signal to a control circuit, in particular for detecting the operating state of an electrical consumer, in particular a centrifugal pump motor, canned motor pump motor or fan motor (M),
- having a power supply unit (N), which is connectable to a general power supply grid, for supplying the control electronics (A),
- having a bimetallic-strip-controlled protective switch (1), and
- having a temperature-dependent resistor (19) through which the control current flows and which activates the bimetallic strip (18) to interrupt the consumer circuit,
whereby both circuits are electrically isolated from each other inside the protective switch (1),
characterized in that
the bimetallic strip (18)
- rests by spring pressure effective in its deflection direction on the resistor (19) in a manner mechanically and electrically contacted with it, and
- as a result of this contacting is connected electrically in series with the resistor (19) within the control circuit.

2. The protective device of claim 1,
characterized in that
the input current to the power supply unit (N) is limited by a temperature-dependent resistor (R6), in particular a positive temperature coefficient (PTC) resistor.

3. The protective device of claim 1 or 2,
characterized in that
it is disposed inside the terminal box (K) of the electrical consumer.

4. The protective device of claims 1,2 or 3,
characterized in that
the sensor (R1) detects the temperature of the electrical consumer, in particular the winding temperature.

5. The protective device of one or more of the foregoing claims,
characterized in that
the sensor is embodied as a shunt, a Hall element or a current transformer for detecting the current picked up by the electrical consumer.

6. The protective device of one or more of the foregoing claims,
characterized in that
the sensor is connected to a microprocessor or ASIC, which outputs the signal for interrupting the consumer circuit.

7. The protective device of one or more of the foregoing claims,
characterized in that
the protective switch (1) has an additional contact by way of which a warning signal can be tripped of the protective switch (1) is tripped.

8. The protective device of one or more of the foregoing claims,
characterized in that
the bimetallic strip (18) rests directly on the resistor (19)

9. The protective device of claim 1 or 8,
characterized in that
the resistor (19) is a PTC resistor.

10. The protective device of one of claims 1,8 or 9,
characterized by
an essentially parallel contact with one another on the part of the resistor (19) and bimetallic strip (18).

11. The protective device of one or more of the foregoing claims,
characterized in that
the compression spring (20) that generates the spring pressure rests, electrically contactingly, on the resistor (19) and is thereby connected electrically in series with the resistor (19) and the bimetallic strip (18).

12. The protective device of one or more of the foregoing claims,
characterized in that
the compression spring (20) is a helical spring, which is supported
- by one end on the resistor (19) and
- by its other end contactingly on a connection contact (21) of the control circuit.

13. The protective device of one or more of the foregoing claims,
characterized in that
the bimetallic strip (18) rests with two diametrically opposed sides (26,26'), supported in a manner fixed to the housing, and rests approximately in the middle between them on the resistor (19).

14. The protective device of claim 13,
characterized in that
the bimetallic strip (18) is retained by its sides (26,26') under diametrically opposed spring pressure between two spring tongues (22,23).

15. The protective device of claim 14,
characterized in that
the spring tongues (22,23) are the arms of a U-shaped contact bracket (17) through which the control current flows.

16. The protective device of one of claims 13-15,
characterized in that
the bimetallic strip (18) rests with its bladelike sides (26,26') in side regions, shaped into a notch (24), of the spring tongues (22,23).

17. The protective device of one or more of the foregoing claims,
characterized in that
the bimetallic strip (18) acts in the contact opening direction upon a contact bridge (35) of the consumer circuit, which bridge (35) is subject to spring pressure in the contact closing direction.

18. The protective device of claim 17,
characterized by
a slide (27), as a transmitting means for the opening pressure, resting between the bimetallic strip (18) and the concact bridge (35).

19. The protective device of claim 18,
characterized in that
the slide (27) is supported on the housing.

20. The protective device of one or more of the foregoing claims,
characterized in that
the thrust direction (6) extends in the direction of compression of the springs (35,20).

21. The protective device of claim 17,
characterized in that
the contact bridge (35) is a contact spring prestressed in the contact closing direction.

22. The protective device of claim 21,
characterized in that
the contact spring (35) is fastened in a manner fixed to the housing.

23. The protective device of one or more of the foregoing claims,
characterized in that
a plurality of contact bridges (35) are disposed side by side to form a multipole protective switch (1) and are acted upon in common by the slide (27).

24. The protective device of claim 23,
characterized by
a parallel position of the contact bridges (35).

25. The protective device of one or more of the foregoing claims,
characterized by
a locking device (32) of the protective switch (1), which device
- keeps the slide (27) and the contact bridge (35) in the contact opening position when the bimetallic strip (18) is activated, and
- is subject to lock spring pressure (29) that is operative in the locking direction.

26. The protective device of claim 25,
characterized in that
the locking device (32) is a lock pin supported on the housing and engaging a slide recess (31).

27. The protective device of claim 25 or 26,
characterized in that
the lock spring (29) is a leaf spring supported on a housing wall (8) of the protective switch (1).

28. The protective device of claim 27,
characterized by
a U-shape of the lock spring (29), which is fastened by the outer sides of the legs of the U between a housing wall (8) and the end of the lock pin (32) remote from the slide (27).

29. The protective device of one or more of the foregoing claims,
characterized in that
a cantilever (54) protruding at approximately right angles from the locking direction of the lock pin (32) has a pressure tappet (56,57), oriented in the locking direction, which protrudes by its end acting as a pushbutton (15) through a housing wall opening (16) of the protective switch (1) in such a way that the lock pin (32) can be unlocked by pushbutton (15) actuation, compressing the lock spring (29).

## Revendications

1. Dispositif de sécurité comportant
- au moins un détecteur (H, R1) envoyant un signal de mesure électrique à un circuit de courant de commande, en particulier pour la saisie de l'état de fonctionnement d'un appareil électrique, en particulier d'un moteur (M) de pompe centrifuge, à gaine ou de ventilateur,
- un bloc d'alimentation (N) pouvant être connecté à l'alimentation générale de courant pour alimenter le système électronique de commande (A),
- un disjoncteur (1) commandé par bilame, et
- une résistance (19) dépendante de la température qui est traversée par le courant de commande, et qui active le bilame (18) pour l'interruption du circuit de courant de l'appareil,
les deux circuits de courant étant électriquement séparés l'un de l'autre à l'intérieur du disjoncteur (1),
caractérisé en ce que :
le bilame (18)
- s'appuie avec contact mécanique et électrique contre la résistance (19) sous la pression d'un ressort agissant dans sa direction de déflexion, et
- il est branché électriquement en série avec la résistance (19) par ce contact à l'intérieur du circuit de courant de commande.

2. Dispositif de sécurité selon la revendication 1,
caractérisé en ce que le courant d'entrée du bloc d'alimentation (N) est limité par une résistance dépendante de la température, en particulier par un posistor.

3. Dispositif de sécurité selon l'une ou l'autre des revendications 1 et 2,
caractérisé en ce qu'il est agencé à l'intérieur d'un coffret à bornes (K) de l'appareil électrique.

4. Dispositif de sécurité selon l'une quelconque des revendications 1, 2 et 3, caractérisé en ce que le détecteur (R1) saisit la température de l'appareil électrique, en particulier la température d'enroulement.

5. Dispositif de sécurité selon l'une ou plusieurs des revendications précédentes, caractérisé en ce que le détecteur est réalisé sous forme de shunt, d'élément à effet Hall, ou de transformateur de courant, pour saisir le courant encaissé par l'appareil électrique.

6. Dispositif de sécurité selon l'une ou plusieurs des revendications précédentes, caractérisé en ce que le détecteur est relié à un microprocesseur ou à un composant spécifique à l'appareil utilisateur, qui envoie le signal pour interrompre le circuit de courant de l'appareil.

7. Dispositif de sécurité selon l'une ou plusieurs des revendications précédentes, caractérisé en ce que le disjoncteur (1) présente un contact supplémentaire via lequel un signal d'indication est déclenchable lorsque le disjoncteur (1) est déclenché.

8. Dispositif de sécurité selon l'une ou plusieurs des revendications précédentes, caractérisé en ce que le bilame (18) s'appuie directement contre la résistance (19).

9. Dispositif de sécurité selon l'une ou l'autre des revendications 1 et 8, caractérisé en ce que la résistance (19) est une résistance à coefficient de température positif.

10. Dispositif de sécurité selon l'une quelconque des revendications 1, 8 et 9, caractérisé par un appui sensiblement parallèle de la résistance (19) et du bilame (18).

11. Dispositif de sécurité selon l'une ou plusieurs des revendications précédentes, caractérisé en ce que le ressort de pression (20) établissant la pression s'appuie avec contact électrique contre la résistance (19) et est ainsi branché électriquement en série avec la résistance (19) et le bilame (18).

12. Dispositif de sécurité selon l'une ou plusieurs des revendications précédentes, caractérisé en ce que le ressort de pression (20) est un ressort hélicoïdal qui
- s'appuie par l'une de ses extrémités contre la résistance (19), et
- est par l'autre extrémité en contact contre un contact de branchement (21) du circuit de courant de commande.

13. Dispositif de sécurité selon l'une ou plusieurs des revendications précédentes, caractérisé en ce que le bilame (18) est monté solidairement du boîtier avec deux faces (26, 26') diamétralement en vis-à-vis et s'appuie approximativement au milieu des deux contre la résistance (19).

14. Dispositif de sécurité selon la revendication 13, caractérisé en ce que le bilame (18) est retenu avec deux faces (26, 26') entre deux languettes de ressort (22, 23) sous la pression d'un ressort agissant en direction diamétrale.

15. Dispositif de sécurité selon la revendication 14, caractérisé en ce que les languettes de ressort (22, 23) sont les branches d'une anse de contact (17) en forme de U et traversée par le courant de commande.

16. Dispositif de sécurité selon l'une quelconque des revendications 13 à 15, caractérisé en ce que le bilame (18) est logé avec ses faces (26, 26') en forme de tranchants dans des régions de flanc des languettes de ressort (22, 23), réalisées de manière à former une entaille (24).

17. Dispositif de sécurité selon l'une ou plusieurs des revendications précédentes, caractérisé en ce que le bilame (18) sollicite en direction d'ouverture de contact un pont de contact (35) du circuit de courant d'appareil, qui subit la pression d'un ressort en direction de fermeture de contact.

18. Dispositif de sécurité selon la revendication 17, caractérisé par un coulisseau (27) logé entre le bilame (18) et le pont de contact (35) et agissant comme moyen de transmission pour la pression d'ouverture.

19. Dispositif de sécurité selon la revendication 18, caractérisé en ce que le coulisseau (17) est monté dans le boîtier.

20. Dispositif de sécurité selon l'une ou plusieurs des revendications précédentes, caractérisé en ce que la direction de poussée (6) s'étend en direction de pression des ressorts (35, 20).

21. Dispositif de sécurité selon la revendication 17, caractérisé en ce que le pont de contact (35) est un ressort de contact précontraint en direction de fermeture de contact.

22. Dispositif de sécurité selon la revendication 21, caractérisé en ce que le ressort de contact (35) est serré solidairement avec le boîtier.

23. Dispositif de sécurité selon l'une ou plusieurs des revendications précédentes, caractérisé en ce que pour former un disjoncteur (1) à plusieurs pôles, plusieurs ponts de contact (35) sont agencés les uns à côté des autres et sont sollicités conjointement par le coulisseau (27).

24. Dispositif selon la revendication 23, caractérisé par une position parallèle des ponts de contact (35).

25. Dispositif de sécurité selon l'une ou plusieurs des revendications précédentes, caractérisé par un dispositif de verrouillage (32) du disjoncteur (1), qui
- retient le coulisseau (27) et le pont de contact (35) en position d'ouverture de contact lorsque le bilame (18) est actif, et
- se trouve sous la pression d'un ressort de verrouillage (29) agissant en direction de verrouillage.

26. Dispositif de sécurité selon la revendication 25, caractérisé en ce que le dispositif de verrouillage (32) est un tenon de verrouillage qui s'engage dans un évidement (31) du coulisseau et qui est monté dans le boîtier.

27. Dispositif de sécurité selon l'une ou l'autre des revendications 25 et 26, caractérisé en ce que le ressort de verrouillage (29) est un ressort à lame qui s'appuie contre une paroi de boîtier (8) du disjoncteur (1).

28. Dispositif de sécurité selon la revendication 27, caractérisé par une forme en U du ressort de verrouillage (29) qui est serré par les flancs extérieurs de ses branches entre une paroi de boîtier (8) et l'extrémité du tenon de verrouillage, qui est éloignée du coulisseau.

29. Dispositif de sécurité selon l'une ou plusieurs des revendications précédentes, caractérisé en ce qu'un bras (54) faisant saillie approximativement à angle droit par rapport à la direction de verrouillage du tenon de verrouillage (32) présente un poinçon de pression (56, 57) dirigé en direction de verrouillage, qui traverse par son extrémité servant de poussoir (15) une ouverture de paroi de boîtier (16) du disjoncteur (1), de telle sorte que le tenon de verrouillage (32) peut être déverrouillé par la sollicitation du poussoir sous compression du ressort de verrouillage (29).
